# EUROPEAN PATENT APPLICATION

(11) **EP 4 848 644 A1**
(43) Date of publication of application: **02.12.2026**
(21) Application number: 25745370.4
(22) Date of filing: 23.01.2025
(51) Int. Cl.: H04L 5/00, H04L 1/08, H04W 72/231, H04W 72/1268, H04W 72/21, H04W 8/24, H04W 84/06, H04W 72/23

(54) **METHOD AND APPARATUS FOR PERFORMING REPETITIVE TRANSMISSION AND MULTIPLEXING OF TERMINAL-TO-BASE STATION COMMUNICATION IN NON-TERRESTRIAL NETWORK**

(30) Priority: 23.01.2024 KR 20240010487; 12.04.2024 KR 20240049640; 22.08.2024 US 202463686120 P; 19.11.2024 US 202463722517 P; 21.11.2024 KR 20240167520
(71) Applicant: LG Electronics Inc., Yeongdeungpo-gu Seoul 07336 (KR)
(72) Inventor: PARK, Hanjun, Seoul 06772 (KR); LEE, Seungmin, Seoul 06772 (KR); HWANG, Daesung, Seoul 06772 (KR)
(74) Representative: Frenkel, Matthias Alexander
(86) International application number: PCT/KR2025/001360
(87) International publication number: WO 2025/159547

(57) **Abstract**

Proposed is a method for operating a first device (100) in a wireless communication system. The method comprises the steps of: obtaining information regarding multiple resources related to device-to-base station channel repetition; and obtaining information related to an orthogonal cover code, wherein the multiple resources include at least one orthogonal cover code group to which the orthogonal cover code is applied. On the basis of an overlap between the first orthogonal cover code group among the at least one orthogonal cover code group and a device-to-base station physical control channel resource, all transmissions based on the first orthogonal cover code group may be dropped.

## Description

### TECHNICAL FIELD

This disclosure relates to a wireless communication system.

### BACKGROUND ART

5G NR is the next generation technology of long term evolution (LTE) and is a new clean-slate form mobile communication system with high performance, low latency, and high availability. 5G NR may utilize all available spectrum resources, from the low frequency bands below 1 GHz to the mid-frequency bands from 1 GHz to 10 GHz and the high frequency (millimeter wave) bands above 24 GHz.

The 6G (wireless communication) system is aimed at (i) very high data rates per device, (ii) a very large number of connected devices, (iii) global connectivity, (iv) very low latency, (v) lowering energy consumption for battery-free internet of things (IoT) devices, (vi) ultra-reliable connectivity, and (vii) connected intelligence with machine learning capabilities. The vision of the 6G system may be in four aspects: intelligent connectivity, deep connectivity, holographic connectivity, and ubiquitous connectivity, and the 6G system may satisfy the requirements as shown in Table 1 below. For example, Table 1 may represent an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

According to an embodiment of the present disclosure, a method that may be performed by a first device may be proposed. For example, the method may comprise: obtaining information for a plurality of device-to-base station physical shared channel resources related to device-to-base station physical shared channel repetition; and obtaining information related to an orthogonal cover code, wherein the plurality of device-to-base station physical shared channel resources include at least one orthogonal cover code group to which the orthogonal cover code may be applied, and wherein, based on an overlap between a first device-to-base station physical shared channel resource in a first orthogonal cover code group among the at least one orthogonal cover code group and a first device-to-base station physical control channel resource on which device-to-base station control information is to be transmitted, all device-to-base station physical shared channel transmissions based on the first orthogonal cover code group may be dropped.

According to an embodiment of the present disclosure, a first device may be proposed. For example, the first device may comprise: at least one transceiver; at least one processor; and at least one memory connected to the at least one processor and storing instructions. For example, the instructions, based on being executed by the at least one processor, may cause the first device to: obtain information for a plurality of device-to-base station physical shared channel resources related to device-to-base station physical shared channel repetition; and obtain information related to an orthogonal cover code, wherein the plurality of device-to-base station physical shared channel resources may include at least one orthogonal cover code group to which the orthogonal cover code is applied, and wherein, based on an overlap between a first device-to-base station physical shared channel resource in a first orthogonal cover code group among the at least one orthogonal cover code group and a first device-to-base station physical control channel resource on which device-to-base station control information is to be transmitted, all device-to-base station physical shared channel transmissions based on the first orthogonal cover code group may be dropped.

According to an embodiment of the present disclosure, a processing device configured to control a first device may be proposed. For example, the processing device may comprise: at least one processor; and at least one memory connected to the at least one processor and storing instructions, wherein the instructions, based on being executed by the at least one processor, may cause the first device to: obtain information for a plurality of device-to-base station physical shared channel resources related to device-to-base station physical shared channel repetition; and obtain information related to an orthogonal cover code, wherein the plurality of device-to-base station physical shared channel resources may include at least one orthogonal cover code group to which the orthogonal cover code is applied, and wherein, based on an overlap between a first device-to-base station physical shared channel resource in a first orthogonal cover code group among the at least one orthogonal cover code group and a first device-to-base station physical control channel resource on which device-to-base station control information is to be transmitted, all device-to-base station physical shared channel transmissions based on the first orthogonal cover code group may be dropped.

According to an embodiment of the present disclosure, a non-transitory computer-readable storage medium storing instructions may be proposed. For example, the instructions, when executed, may cause a first device to: obtain information for a plurality of device-to-base station physical shared channel resources related to device-to-base station physical shared channel repetition; and obtain information related to an orthogonal cover code, wherein the plurality of device-to-base station physical shared channel resources may include at least one orthogonal cover code group to which the orthogonal cover code is applied, and wherein, based on an overlap between a first device-to-base station physical shared channel resource in a first orthogonal cover code group among the at least one orthogonal cover code group and a first device-to-base station physical control channel resource on which device-to-base station control information is to be transmitted, all device-to-base station physical shared channel transmissions based on the first orthogonal cover code group may be dropped.

According to an embodiment of the present disclosure, a method that may be performed by a second device may be proposed. For example, the method may comprise: transmitting, to a first device, information for a plurality of device-to-base station physical shared channel resources related to device-to-base station physical shared channel repetition, wherein the plurality of device-to-base station physical shared channel resources may include at least one orthogonal cover code group to which an orthogonal cover code is applied; and receiving, from the first device, device-to-base station control information based on a first device-to-base station physical control channel resource, wherein, based on an overlap between a first device-to-base station physical shared channel resource in a first orthogonal cover code group among the at least one orthogonal cover code group and the first device-to-base station physical control channel resource, all device-to-base station physical shared channel transmissions based on the first orthogonal cover code group may be dropped.

According to an embodiment of the present disclosure, a second device may be proposed. For example, the second device may comprise: at least one transceiver; at least one processor; and at least one memory connected to the at least one processor and storing instructions. For example, the instructions, based on being executed by the at least one processor, may cause the second device to: transmit, to a first device, information for a plurality of device-to-base station physical shared channel resources related to device-to-base station physical shared channel repetition, wherein the plurality of device-to-base station physical shared channel resources may include at least one orthogonal cover code group to which an orthogonal cover code is applied; and receive, from the first device, device-to-base station control information based on a first device-to-base station physical control channel resource, wherein, based on an overlap between a first device-to-base station physical shared channel resource in a first orthogonal cover code group among the at least one orthogonal cover code group and the first device-to-base station physical control channel resource, all device-to-base station physical shared channel transmissions based on the first orthogonal cover code group may be dropped.

### BRIEF DESCRIPTION OF THE DRAWINGS

FIG. 1 shows a communication procedure between devices according to an embodiment of the present disclosure.
FIG. 2 shows a radio protocol architecture according to an embodiment of the present disclosure.
FIG. 3 shows a structure of a radio frame according to an embodiment of the present disclosure.
FIG. 4 shows a slot structure of a frame according to an embodiment of the present disclosure.
FIG. 5 shows an example of a BWP according to an embodiment of the present disclosure.
FIG. 6 shows a communication structure providable in a 6G system according to an embodiment of the present disclosure.
FIG. 7 shows an example of a communication scenario based on a 6G system according to an embodiment of the present disclosure.
FIG. 8 shows transmission resources for UE-to-base station physical shared channel repetition (e.g., PUSCH repetition) to which an orthogonal cover code (e.g., OCC) is applied, according to an embodiment of the present disclosure.
FIG. 9 shows a piggyback operation when a resource for UE-to-base station physical control channel transmission (e.g., PUCCH transmission) overlaps with a resource for UE-to-base station physical shared channel repetition (e.g., PUSCH repetition), according to an embodiment of the present disclosure.
FIG. 10 shows a procedure of a method which may be performed by a first device according to an embodiment of the present disclosure.
FIG. 11 shows a procedure of a method which may be performed by a second device according to an embodiment of the present disclosure.
FIG. 12 shows a communication system 1, based on an embodiment of the present disclosure.
FIG. 13 shows wireless devices, based on an embodiment of the present disclosure.
FIG. 14 shows a signal process circuit for a transmission signal, based on an embodiment of the present disclosure.
FIG. 15 shows another example of a wireless device, based on an embodiment of the present disclosure.
FIG. 16 shows a hand-held device, based on an embodiment of the present disclosure.
FIG. 17 shows a vehicle or an autonomous vehicle according to an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (e.g., PDCCH)", it may also mean that "PDCCH" is proposed as an example of the "control information".

In the following description, 'when, if, or in case of' may be replaced with 'based on'.

In the present disclosure, that a device obtains information may include that the information is (pre-)configured for the device, that the information is received by the device from another entity, and that the device generates corresponding information.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, being "configured or defined" may be interpreted as being configured or pre-configured for a device through signaling (e.g., a SIB, a MAC, an RRC, a downlink control information (DCI), and the like) predefined from a base station or a network. In the present disclosure, being "configured or defined" may be interpreted as being configured or pre-configured for a device through signaling (e.g., a MAC, an RRC, a sidelink control information (SCI), control information signaled between devices, and the like) predefined from another device. In the present disclosure, being "configured or defined" may be interpreted as being pre-configured for a device.

In the present disclosure, a user equipment (UE) may refer to a device, a portable device, a wireless device, and the like. In the present disclosure, a base station (BS) may refer to a radio access network (RAN) node, a non-terrestrial network (NTN) cell/node, a transmission reception point (TRP), a network, an integrated access and backhaul (IAB) node, a device, a portable device, a wireless device, and the like.

The technology described in the present disclosure may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on.

The technologies proposed in the present disclosure may be implemented in 6G wireless technologies and may be applied to various 6G systems. For example, 6G systems may include key factors such as enhanced mobile broadband (eMBB), ultra-reliable low latency communications (URLLC), massive machine-type communication (mMTC), artificial intelligence (AI) integrated communication, tactile internet, and high throughput, high network capacity, high energy efficiency, low backhaul and access network congestion, and enhanced data security.

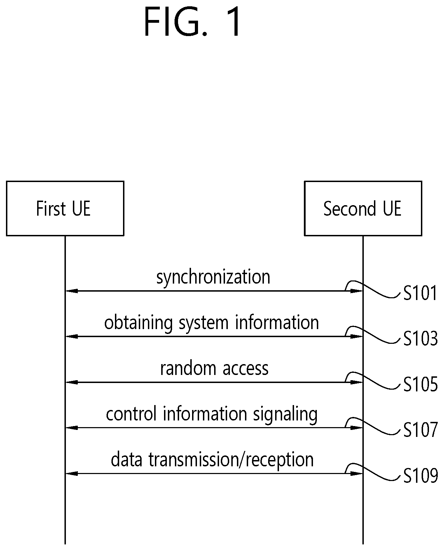

FIG. 1 shows a communication procedure between devices according to an embodiment of the present disclosure. The embodiment of FIG. 1 may be combined with various embodiments of the present disclosure.

Referring to FIG. 1, in step S101, a first device and a second device may perform synchronization. For example, the first device may be at least any one of a UE and/or a device proposed in the present disclosure. For example, the second device may be at least any one of a base station, a network, a RAN node, an NTN node/cell, a TRP, a UE, and/or a device proposed in the present disclosure. For example, the first device may perform an initial cell search operation. For example, the first device may detect at least one synchronization signal transmitted according to a predefined rule by the second device. Here, for example, the synchronization signal may include a plurality of synchronization signals (e.g., a primary synchronization signal, a secondary synchronization signal, etc.) classified according to a structure or a use. Through this, the first device may check a boundary of a frame, a subframe, a time unit, a slot, and/or a symbol of the second device, and the first device may obtain information (e.g., a cell identifier) on the second device.

In step S103, a first device may obtain system information transmitted by a second device. For example, system information may include information related to properties, characteristics, and/or capabilities of a second device required to access the second device and use a service. For example, system information may be classified according to content (e.g., whether it is essentially required for access), a transmission structure (e.g., a channel used, whether it is provided on-demand), and the like. For example, system information may be classified into a master information block (MIB) and a system information block (SIB). For example, if necessary, a first device may transmit a signal for requesting system information prior to receiving system information. For example, request and provision of system information may be performed after a random access procedure to be described later.

In step S105, a first device and a second device may perform a random access procedure. For example, a first device may transmit and/or receive at least one message (e.g., a random access preamble, a random access response message, etc.) for a random access procedure based on information related to a random access channel of a second device (e.g., channel location, channel structure, a structure of a supported preamble, etc.) obtained through system information. For example, a first device may transmit a preamble (e.g., Msg1) through a random access channel, a first device may receive a random access response message (e.g., Msg2), a first device may transmit a message (e.g., Msg3) including information related to a first device (e.g., identification information) to a second device by using scheduling information included in a random access response message, and a first device may receive a message (e.g., Msg4) for contention resolution and/or connection establishment. For example, Msg1 and Msg3 may be transmitted and received as a single message (e.g., MsgA), and/or Msg2 and Msg4 may be transmitted and received as a single message (e.g., MsgB).

In step S107, a first device and a second device may perform signaling of control information. Here, for example, control information may be defined in various layers such as a layer for controlling a connection (e.g., a radio resource control (RRC) layer), a layer for processing mapping between a logical channel and a transport channel (e.g., a media access control (MAC) layer), and a layer for processing a physical channel (e.g., a physical (PHY) layer). For example, a first device and a second device may perform at least one of signaling for establishing a connection, signaling for determining a configuration related to communication, and/or signaling for indicating an allocated resource. For example, control information may be signaled/transmitted through a control channel. For example, control information and/or a control channel may be used to schedule at least any one of data, a data channel (e.g., a shared channel), and/or control information on a data channel.

In step S109, a first device and a second device may transmit and/or receive data. For example, a first device and a second device may process, transmit, and/or receive data based on signaling of control information. For example, in a case of transmitting data, a first device or a second device may perform at least one of channel encoding, rate matching, scrambling, constellation mapping, layer mapping, waveform modulation, antenna mapping, and/or resource mapping for information bits. For example, in a case of receiving data, a first device or a second device may perform at least one of signal extraction from a resource, waveform demodulation for each antenna, signal arrangement considering layer mapping, constellation demapping, descrambling, and/or channel decoding.

For example, layers of a radio interface protocol between a first device and a second device may be classified into L1 (layer 1), L2 (layer 2), L3 (layer 3), and the like. For example, a physical layer belonging to a first layer may provide an information transfer service using a physical channel, and a radio resource control (RRC) layer located in a third layer may perform a role of controlling radio resources between a first device and a second device. To this end, for example, an RRC layer may exchange an RRC message between a first device and a second device.

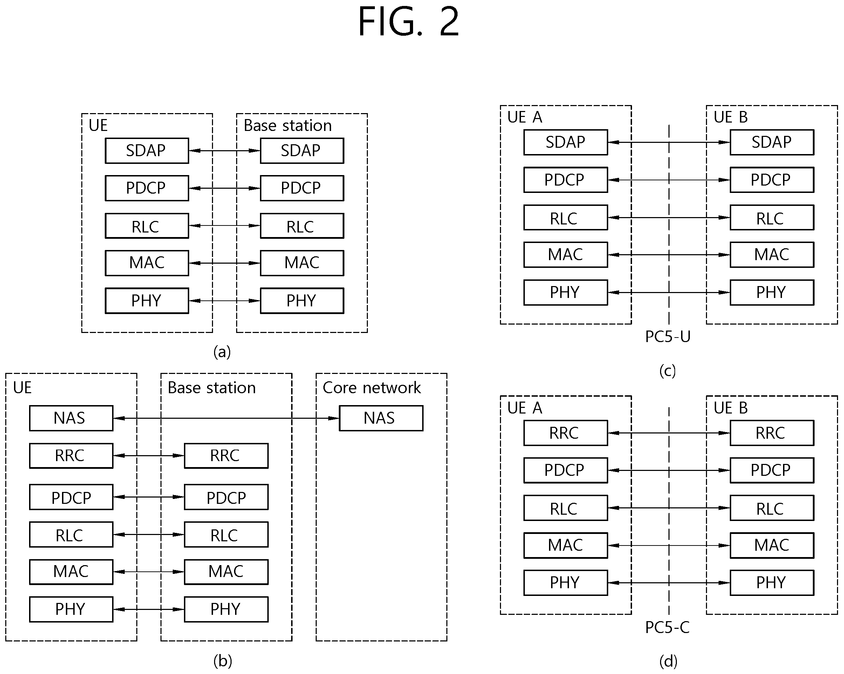

FIG. 2 shows a radio protocol architecture according to an embodiment of the present disclosure. The embodiment of FIG. 2 may be combined with various embodiments of the present disclosure. For example, (a) of FIG. 2 may show a radio protocol stack of a user plane for uplink communication or downlink communication, and (b) of FIG. 2 may show a radio protocol stack of a control plane for uplink communication or downlink communication. For example, (c) of FIG. 2 may show a radio protocol stack of a user plane for inter-device communication, and (d) of FIG. 2 may show a radio protocol stack of a control plane for inter-device communication.

For example, a physical layer may provide an information transfer service to a higher layer by using a physical channel. For example, a physical layer may be connected with a medium access control (MAC) layer, which is a higher layer, through a transport channel. For example, data may be transferred between a MAC layer and a physical layer through a transport channel. For example, a transport channel may be classified according to how and with what characteristics data is transmitted through a radio interface. For example, data may be transmitted through a physical channel between different physical layers, for example, between physical layers of a first device and a second device. For example, the physical channel may be modulated in an orthogonal frequency division multiplexing (OFDM) scheme, and time and frequency may be utilized as radio resources.

For example, a MAC layer may provide a service to a radio link control (RLC) layer, which is a higher layer, through a logical channel. For example, a MAC layer may provide a mapping function from a plurality of logical channels to a plurality of transport channels. For example, a MAC layer may provide a logical channel multiplexing function by mapping from a plurality of logical channels to a single transport channel. For example, a MAC sublayer may provide a data transfer service on a logical channel.

For example, an RLC layer may perform concatenation, segmentation, and reassembly of an RLC service data unit (SDU). For example, to guarantee various quality of service (QoS) required by a radio bearer (RB), an RLC layer may provide three operation modes of a transparent mode (TM), an unacknowledged mode (UM), and an acknowledged mode (AM). For example, an AM RLC may provide error correction through an automatic repeat request (ARQ).

For example, a radio resource control (RRC) layer may be defined only in a control plane. For example, an RRC layer may be in charge of control of logical channels, transport channels, and physical channels in relation to configuration, reconfiguration, and release of radio bearers. For example, an RB may mean a logical path provided by a first layer (e.g., a physical layer) and a second layer (e.g., a MAC layer, an RLC layer, a packet data convergence protocol (PDCP) layer, a service data adaptation protocol (SDAP) layer, etc.) for data transfer between a first device and a second device.

For example, functions of a PDCP layer in a user plane may include delivery of user data, header compression, and ciphering. For example, functions of a PDCP layer in a control plane may include delivery of control plane data and ciphering/integrity protection.

For example, that an RB is configured may mean a process of defining characteristics of a radio protocol layer and a channel to provide a specific service, and configuring each specific parameter and an operation method. For example, an RB may be divided into two: a signaling radio bearer (SRB) and a data radio bearer (DRB). For example, an SRB may be used as a path for transmitting an RRC message in a control plane, and a DRB may be used as a path for transmitting user data in a user plane.

For example, a downlink transport channel may include at least one of a broadcast channel (BCH) for transmitting system information and/or a downlink shared channel (SCH) for transmitting user traffic or a control message. For example, traffic or a control message for a downlink multicast or broadcast service may be transmitted through the downlink SCH, or may be transmitted through a separate multicast channel (MCH). Meanwhile, an uplink transport channel may include at least one of a random access channel (RACH) for transmitting an initial control message and/or an uplink shared channel (SCH) for transmitting user traffic or a control message. For example, a logical channel that is above a transport channel and mapped to the transport channel may include at least one of a broadcast control channel (BCCH), a paging control channel (PCCH), a common control channel (CCCH), a multicast control channel (MCCH), and/or a multicast traffic channel (MTCH).

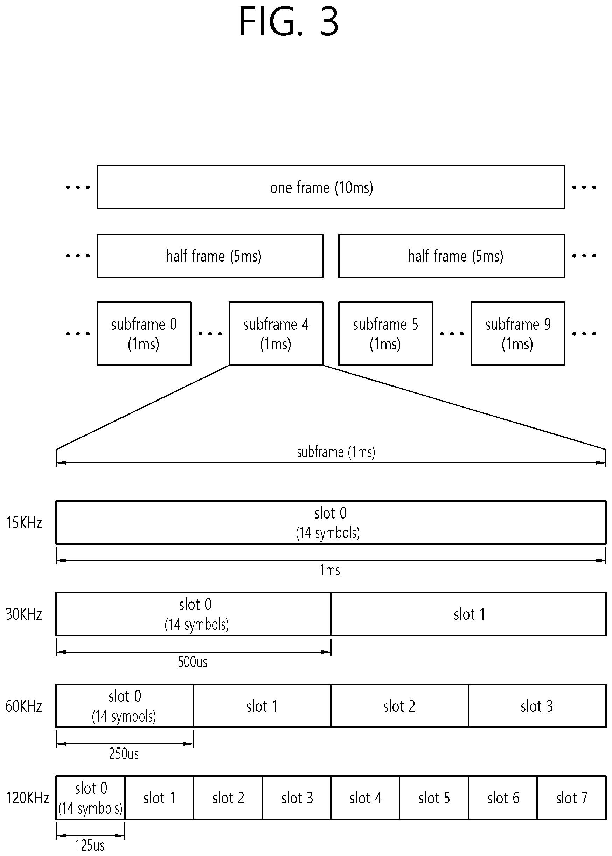

FIG. 3 shows a structure of a radio frame according to an embodiment of the present disclosure. The embodiment of FIG. 3 may be combined with various embodiments of the present disclosure.

Referring to FIG. 3, for example, a radio frame may be used for uplink transmission, downlink transmission, and/or inter-device transmission. For example, the radio frame may have a length of 10 ms and may be defined as two 5 ms half-frames (HFs). For example, a half-frame may include five 1 ms subframes (SFs). For example, a subframe may be divided into one or more slots, and a number of slots in the subframe may be determined according to a subcarrier spacing (SCS). For example, each slot may include 12 or 14 orthogonal frequency division multiplexing/multiple access (OFDM)(A) symbols according to a cyclic prefix (CP).

For example, in case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot (N^{slot}_{symb}), the number of slots per frame (N^{frame,u}ₛₗₒₜ), and the number of slots per subframe (N^{subframe,u}ₛₗₒₜ), according to an SCS configuration (u), when Normal CP or Extended CP is used.

**[Table 2]**

| CP Type | SCS (15*2^{u}) | N^{slot}_{symb} | N^{frame,u}ₛₗₒₜ | N^{subframe,u}ₛₗₒₜ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| Extended CP | 60kHz (u=2) | 12 | 40 | 4 |

For example, OFDM(A) numerology (e.g., SCS, CP length, etc.) may be set differently between a plurality of cells aggregated for a UE. Accordingly, an (absolute time) interval of a time resource (e.g., a subframe, a slot, or a transmit time interval (TTI)) composed of the same number of symbols may be set differently between aggregated cells. For example, in the present disclosure, a time resource such as a subframe, a slot, a TTI, and the like may be referred to as a time unit.

For example, a plurality of numerologies or SCSs for supporting various services may be supported. For example, in a case where a SCS is 15 kHz, a wide area in traditional cellular bands may be supported, and in a case where a SCS is 30 kHz/60 kHz, a dense-urban, a lower latency, and a wider carrier bandwidth may be supported. For example, in a case where a SCS is 60 kHz or higher, a bandwidth greater than 24.25 GHz may be supported to overcome phase noise.

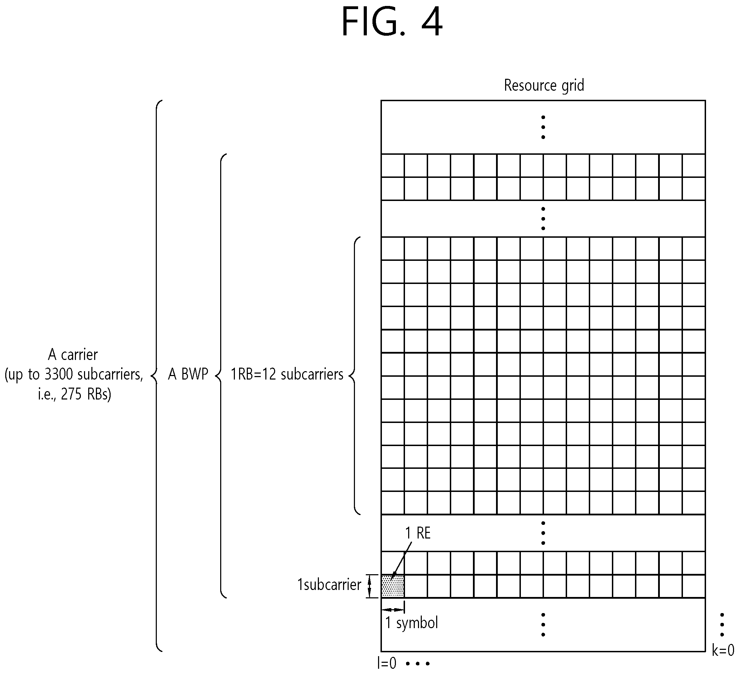

FIG. 4 shows a slot structure of a frame according to an embodiment of the present disclosure. The embodiment of FIG. 4 may be combined with various embodiments of the present disclosure.

Referring to FIG. 4, for example, a slot may include a plurality of symbols in a time domain. For example, a carrier may include a plurality of subcarriers in a frequency domain. For example, a resource block (RB) may be defined as a plurality of consecutive subcarriers in a frequency domain. For example, a bandwidth part (BWP) may be defined as a plurality of consecutive (physical) resource blocks ((P)RBs) in a frequency domain, and may correspond to one numerology (e.g., SCS, CP length, etc.). For example, a carrier may include up to N BWPs (here, N is a positive integer). For example, data communication may be performed through an activated BWP. For example, each element may be referred to as a resource element (RE) in a resource grid, and one complex symbol may be mapped.

For example, a BWP may be a consecutive set of PRBs in a given numerology. For example, a PRB may be selected from a consecutive subset of common resource blocks (CRBs) for a given numerology on a given carrier.

For example, a BWP may be at least any one of an active BWP, an initial BWP, and/or a default BWP. For example, a UE may not monitor downlink radio link quality in a DL BWP other than an active downlink (DL) BWP on a primary cell (PCell). For example, a UE may not receive a physical downlink control channel (PDCCH), a physical downlink shared channel (PDSCH), or a channel state information-reference signal (CSI-RS) (except for radio resource management (RRM)) outside an active DL BWP. For example, a UE may not trigger channel state information (CSI) reporting for an inactive DL BWP. For example, a UE may not transmit a physical uplink control channel (PUCCH) or a physical uplink shared channel (PUSCH) outside an active uplink (UL) BWP. For example, in a case of downlink, an initial BWP may be given as a consecutive resource block (RB) set for a remaining minimum system information (RMSI) control resource set (CORESET) (configured by a physical broadcast channel (PBCH)). For example, in a case of uplink, an initial BWP may be given by a system information block (SIB) for a random access procedure. For example, a default BWP may be configured by a higher layer. For example, an initial value of a default BWP may be an initial DL BWP. For energy saving, if a UE fails to detect downlink control information (DCI) for a certain period, a UE may switch an active BWP of the UE to a default BWP.

In the present disclosure, a PSCCH may be replaced with a control channel, a physical control channel, a control channel related to a sidelink, a physical control channel related to a sidelink, an inter-device physical control channel, and the like. In the present disclosure, a PSSCH may be replaced with a shared channel, a physical shared channel, a shared channel related to a sidelink, a physical shared channel related to a sidelink, an inter-device physical shared channel, and the like. For example, SL communication may be replaced with inter-device communication. For example, in a term referring to various channels and/or signals related to SL communication, an SL part may be replaced with "inter-device".

In the present disclosure, PUCCH may be replaced with a control channel, a physical control channel, a control channel related to uplink, a physical control channel related to uplink, a device-to-base station physical control channel, a UE-to-base station physical control channel, or the like. In the present disclosure, PUSCH may be replaced with a shared channel, a physical shared channel, a shared channel related to uplink, a physical shared channel related to uplink, a device-to-base station physical shared channel, a UE-to-base station physical shared channel, or the like. For example, UL communication may be replaced with UE-to-base station communication or device-to-base station communication. For example, in a term referring to various channels and/or signals related to UL communication, the UL portion may be replaced with "device-to-base station" or "UE-to-base station".

In the present disclosure, PDCCH may be replaced with a control channel, a physical control channel, a control channel related to downlink, a physical control channel related to downlink, a base station-to-device physical control channel, a base station-to-UE physical control channel, or the like. In the present disclosure, PDSCH may be replaced with a shared channel, a physical shared channel, a shared channel related to downlink, a physical shared channel related to downlink, a base station-to-device physical shared channel, a base station-to-UE physical shared channel, or the like. For example, DL communication may be replaced with base station-to-device communication or base station-to-UE communication. For example, in a term referring to various channels and/or signals related to DL communication, the DL portion may be replaced with "base station-to-device" or "base station-to-UE".

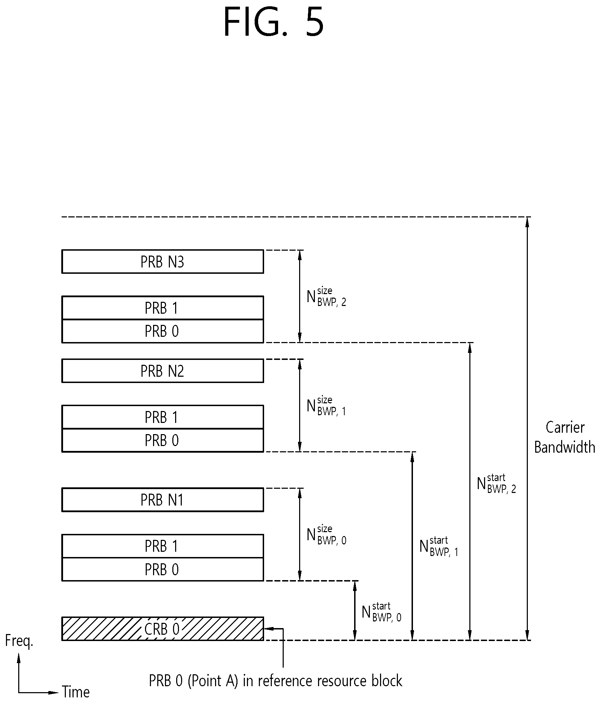

FIG. 5 shows an example of a BWP according to an embodiment of the present disclosure. The embodiment of FIG. 5 may be combined with various embodiments of the present disclosure. In an embodiment of FIG. 5, it is assumed that there are three BWPs.

Referring to FIG. 5, for example, a common resource block (CRB) may be a carrier resource block numbered from one end to the other end of a carrier band, and a PRB may be a resource block numbered within each BWP. For example, Point A may indicate a common reference point for a resource block grid.

For example, a BWP may be configured by Point A, an offset (N^{start}_{BWP}) from Point A, and a bandwidth (N^{size}_{BWP}). For example, Point A may be an external reference point of a PRB of a carrier in which subcarrier 0 of all numerologies (e.g., all numerologies supported by a network in the corresponding carrier) is aligned. For example, an offset may be a PRB interval between the lowest subcarrier and Point A in a given numerology. For example, a bandwidth may be the number of PRBs in a given numerology.

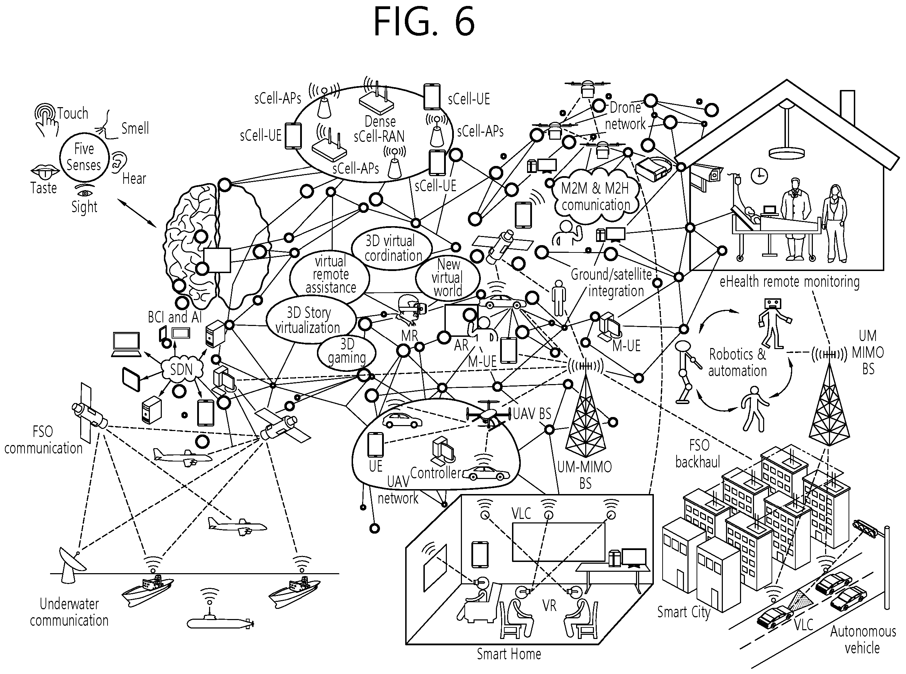

FIG. 6 shows a communication structure providable in a 6G system according to an embodiment of the present disclosure. The embodiment of FIG. 6 may be combined with various embodiments of the present disclosure.

As core implementation technologies of a 6G system, technologies such as artificial intelligence (AI), Terahertz (THz) communication, optical wireless technology, a free-space optical (FSO) backhaul network, massive multiple input multiple output (MIMO) technology, blockchain, 3D networking, quantum communication, an unmanned aerial vehicle, cell-free communication, wireless information and energy transfer (WIET), the integration of sensing and communication, the integration of an access backhaul network, holographic beamforming, big data analysis, and a large intelligent surface (LIS) may be adopted.
- Artificial intelligence: Introducing AI into telecommunications may simplify and improve real-time data transmission. AI may use numerous analytics to determine the way complex target tasks are performed, which means AI may increase efficiency and reduce processing delays. Time-consuming tasks such as handover, network selection, and resource scheduling may be performed instantly by using AI. AI may also play an important role in machine-to-machine, machine-to-human, and human-to-machine communication. AI may also be a rapid communication in brain computer interface (BCI). AI-based communication systems may be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Beamforming
- Optical wireless technology
- FSO Backhaul Network
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- Advanced air mobility (AAM): AAM may be a broad concept encompassing urban air mobility (UAM), regional air mobility (RAM), and an uncrewed aerial system (UAS). For example, AAM may include UAM, RAM, UAS, an uncrewed aerial vehicle (UAV), and the like.
- Autonomous driving, self-driving: Vehicle to everything (V2X), a key element in building an autonomous driving infrastructure, may be a technology that allows cars to communicate and share with various elements on the road to drive autonomously, such as vehicle to vehicle (V2V) and vehicle to infrastructure (V2I).
- Non-terrestrial network (NTN): NTN may show a network or a network segment using radio frequency (RF) resources mounted on a satellite (or a UAS platform). The use of an NTN service may be considered to secure a wider coverage or to provide a wireless communication service to a place where the installation of a wireless communication base station is not easy.
- Integrated sensing and communication, ISAC: Wireless sensing is a technology that uses radio frequencies to determine an object's instantaneous linear velocity, angle, distance (range), etc. to obtain information about an environment and/or the properties of an object in the environment.
- Reconfigurable intelligent surface (RIS): A RIS may be used to manipulate and enhance signal propagation in a wireless communication environment. For example, a RIS may be composed of many small antennas arranged on a surface or a meta surface, and each small antenna may actively adjust the phase, amplitude, polarization, and the like of a reflected signal. For example, a RIS may improve signal reception by adjusting the path, phase, and/or intensity of a propagating signal. For example, in a case of a RIS, the power consumption may be very low because power is consumed only for the phase and amplitude adjustment of a small antenna. For example, because a RIS may be reconfigured according to various environments, various communication requirements may be satisfied, and a RIS may effectively operate in a dynamic network environment.

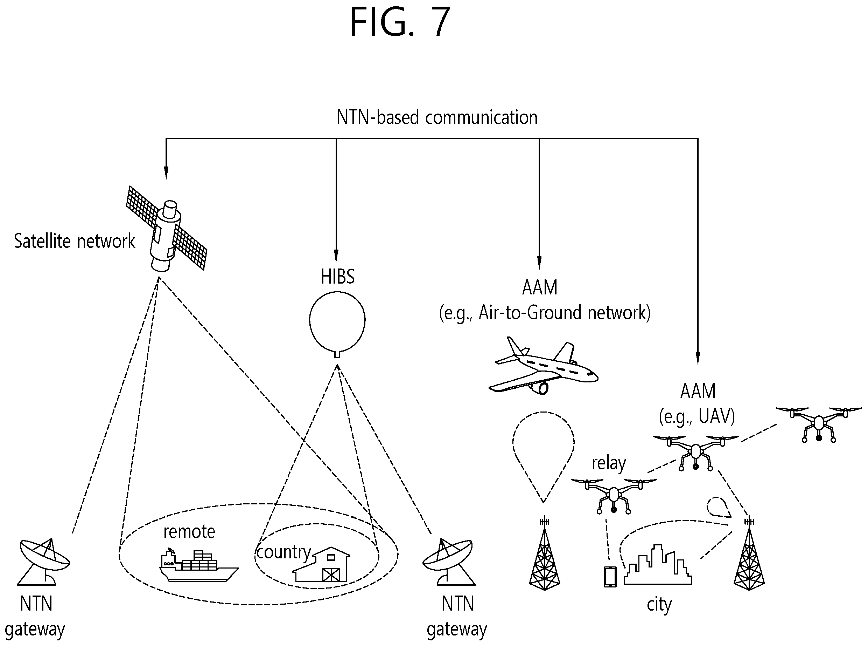

FIG. 7 shows an example of a communication scenario based on a 6G system according to an embodiment of the present disclosure. The embodiment of FIG. 7 may be combined with various embodiments of the present disclosure.

Referring to FIG. 7, for example, NTN communication may be performed based on a satellite network, high-altitude platform stations (HAPS) as international mobile telecommunications (IMT) base stations (BS) (HIBS), a UE (e.g., AAM) capable of aerial communication, and the like. For example, for the enhancement of coverage and the like, a device such as a satellite network, a HIBS, a UE (e.g., AAM) capable of aerial communication, and the like may perform a role of a relay. For example, an AAM may perform communication with a base station, a satellite network, and the like, and/or an AAM may perform direct communication with a UE, another AAM, and the like.

Recently, in the field of communications, introduction of a non-terrestrial network (e.g., NTN) utilizing satellites or the like as network nodes has been actively discussed. A satellite supporting the non-terrestrial network (e.g., NTN) may be classified according to an orbital path and characteristics of the satellite, such as a geostationary earth orbit (e.g., GEO), a medium earth orbit (e.g., MEO), or a low earth orbit (e.g., LEO), and may generally have a characteristic of having a very high altitude. Accordingly, the service area of the satellite may have a very wide coverage characteristic, and the number of target UEs within the service area may be relatively large. Therefore, the non-terrestrial network (e.g., NTN) service may require support for multiplexing of a plurality of UEs.

Here, for example, since a terrestrial UE has a transmit power constraint, a coverage enhancement technique may be applied in order to allow a signal having a sufficient magnitude to reach a high-altitude non-terrestrial network (e.g., NTN) during a UE-to-base station transmission (e.g., a UL transmission). For example, the UE may achieve coverage enhancement by repeating, in a time domain, a UE-to-base station physical shared channel (e.g., PUSCH; Physical Uplink Shared Channel), which is a UE-to-base station communication data channel (e.g., a UL link data channel) (or by repeatedly performing UE-to-base station physical shared channel (e.g., PUSCH) transmission).

Here, the UE may transmit the UE-to-base station physical shared channel (e.g., PUSCH) using a Discrete Fourier Transform Spread Orthogonal Frequency Division Multiplexing (DFT-s-OFDM) scheme for coverage gain. Here, the DFT-s-OFDM modulation scheme may refer to a modulation scheme in which DFT precoding (or DFT spreading) is applied as part of Transform (TF) precoding before an orthogonal frequency division multiplexing (e.g., OFDM) modulation scheme.

Meanwhile, when the coverage enhancement technique is applied, efficiency of resource utilization may be reduced due to repeated transmissions, and, in order to solve the corresponding problem, an uplink multiplexing method using an orthogonal cover code (e.g., Orthogonal Cover Code (OCC)) may be effective. Hereinafter, in the present disclosure, when repeated transmissions of UE-to-base station communication (e.g., UL communication) are performed, a method for achieving capacity enhancement and/or multiplexing of a UE-to-base station communication data channel (e.g., PUSCH) using an orthogonal cover code (e.g., OCC) is proposed.

For example, hereinafter, repeatedly performing UE-to-base station communication data channel transmission (e.g., PUSCH transmission) may be the same as performing transmissions related to UE-to-base station communication data channel repetition (e.g., PUSCH repetition).

### [Proposal #01]

According to an embodiment of the present disclosure, when a UE is able to apply an orthogonal cover code (e.g., OCC) between transmissions of UE-to-base station communication data channel repetition (e.g., PUSCH repetition) (in a time domain) during UE-to-base station communication data channel transmission (e.g., PUSCH transmission), a method for determining a redundancy version (e.g., Redundancy Version (RV)) and/or scrambling (e.g., Scrambling) for the repeated transmission(s) through one or more of the following schemes may be provided.
(1) A scheme for allowing the same redundancy version (e.g., RV) and/or scrambling to be applied to all repeated transmission(s).
(2) A scheme for allowing the same redundancy version (e.g., RV) and/or scrambling to be applied within a resource group to which an orthogonal cover code (e.g., OCC) is applied, and allowing different redundancy versions (e.g., RV) and/or scrambling to be applied between resource groups to which the orthogonal cover code (e.g., OCC) is applied.

Here, application of an orthogonal cover code (e.g., OCC) between UE-to-base station communication data channel repetitions (e.g., PUSCH repetitions) (in a time domain) may refer to an operation of applying the orthogonal cover code (e.g., OCC) in units of repeated transmissions (or in units of a multiple thereof, or in units of an orthogonal cover code (e.g., OCC) group according to a length of the orthogonal cover code (e.g., OCC)).

Here, a resource group (e.g., an orthogonal cover code (e.g., OCC) group) to which the orthogonal cover code (e.g., OCC) is applied may refer to (time domain) resource(s) to which one orthogonal cover code (e.g., OCC) is applied.

Here, whether the orthogonal cover code (e.g., OCC) is applied may be configured and/or indicated by a base station.

According to an embodiment of the present disclosure, assuming that a UE performs UE-to-base station communication data channel transmission (e.g., PUSCH transmission), a method in which the UE repeatedly performs the UE-to-base station communication data channel transmission (e.g., PUSCH transmission) (in a time domain) and applies a (time domain) orthogonal cover code (e.g., OCC) between the repeated transmissions may be provided.

Here, the (time domain) orthogonal cover code (e.g., OCC) may be for a purpose of multiplexing one or more UE-to-base station communication data channel transmissions (e.g., PUSCH transmissions) (within the same cell). Here, in order for the (time domain) orthogonal cover code (e.g., OCC) to be valid, data (or modulated symbols) of the repeatedly transmitted UE-to-base station communication data channel (e.g., PUSCH) may need to be the same.

For example, even if transmissions of UE-to-base station communication data channel repetition (e.g., PUSCH repetition) are transmitted together with an orthogonal cover code (e.g., OCC) (or by applying the orthogonal cover code (e.g., OCC)), if a redundancy version (e.g., RV) and/or scrambling is different for each repetition, orthogonality by the orthogonal cover code (e.g., OCC) may not be guaranteed.

Therefore, in the present disclosure, when a UE is able to apply an orthogonal cover code (e.g., OCC) between transmissions of UE-to-base station communication data channel repetition (e.g., PUSCH repetition) (in a time domain) during UE-to-base station communication data channel transmission (e.g., PUSCH transmission), a method for determining a redundancy version (e.g., RV) and/or scrambling for the repeated transmission(s) through one or more of the following schemes is proposed.
(1) A scheme for allowing the same redundancy version (e.g., RV) and/or scrambling to be applied to all repeated transmission(s).
(2) A scheme for allowing the same redundancy version (e.g., RV) and/or scrambling to be applied within a resource group to which an orthogonal cover code (e.g., OCC) is applied, and allowing different redundancy versions (e.g., RV) and/or scrambling to be applied between resource groups to which the orthogonal cover code (e.g., OCC) is applied.

According to the proposal of the present disclosure, when UE-to-base station communication data channel transmission (e.g., PUSCH transmission) is repeatedly performed (in a time domain), there may be an advantage that a redundancy version (e.g., RV) and/or scrambling diversity operation can be supported while supporting orthogonal cover code (e.g., OCC)-based multiplexing.

As an additional operation for the above proposal, according to an embodiment of the present disclosure, a base station (or a network node) may (pre-)define, configure, and/or indicate, to a UE, (time domain) unit information (hereinafter, redundancy version (e.g., RV) granularity) to which the (same) redundancy version (e.g., RV) is applied (for a UE-to-base station physical shared channel (e.g., PUSCH) to which an orthogonal cover code (e.g., OCC) is applied). Here, the configuration and/or indication may be performed through radio resource control (e.g., Radio Resource Control (RRC)) signaling, base station-to-UE control information (e.g., DCI), and/or MAC control element (e.g., Control Element (CE)).

For example, the base station (or a network node) may provide, to a UE, the redundancy version (e.g., RV) granularity in units of slots or in units of a resource group (and/or an orthogonal cover code (e.g., OCC) length (Length)) to which the orthogonal cover code (e.g., OCC) is applied. For example, the redundancy version (e.g., RV) granularity may be provided in a form of 2 slots and/or 4 slots.

For example, the redundancy version (e.g., RV) granularity may be provided in a form of 1 unit (one time) and/or 2 units (two times) based on a unit of a resource group (and/or an orthogonal cover code (e.g., OCC) length) to which the orthogonal cover code (e.g., OCC) is applied.

For example, when transmissions of UE-to-base station physical shared channel repetition (e.g., PUSCH repetition) to which an orthogonal cover code (e.g., OCC) having an orthogonal cover code (e.g., OCC) length of 2 is applied (hereinafter, transmissions of a first UE-to-base station physical shared channel repetition (e.g., PUSCH repetition)) and transmissions of UE-to-base station physical shared channel repetition (e.g., PUSCH repetition) to which an orthogonal cover code (e.g., OCC) having an orthogonal cover code (e.g., OCC) length of 4 is applied (hereinafter, transmissions of a second UE-to-base station physical shared channel repetition (e.g., PUSCH repetition)) are multiplexed, a base station (or a network node) may configure and/or indicate, for the transmissions of the first UE-to-base station physical shared channel repetition (e.g., PUSCH repetition), a redundancy version (e.g., RV) granularity that is 2 times the orthogonal cover code (e.g., OCC) length, and may configure and/or indicate, for the transmissions of the second UE-to-base station physical shared channel repetition (e.g., PUSCH repetition), a redundancy version (e.g., RV) granularity that is 1 time the orthogonal cover code (e.g., OCC) length.

As another example, when transmissions of UE-to-base station physical shared channel repetition (e.g., PUSCH repetition) to which an orthogonal cover code (e.g., OCC) having an orthogonal cover code (e.g., OCC) length of 2 is applied (hereinafter, transmissions of a third UE-to-base station physical shared channel repetition (e.g., PUSCH repetition)) and transmissions of UE-to-base station physical shared channel repetition (e.g., PUSCH repetition) to which an orthogonal cover code (e.g., OCC) having an orthogonal cover code (e.g., OCC) length of 2 is applied (hereinafter, transmissions of a fourth UE-to-base station physical shared channel repetition (e.g., PUSCH repetition)) are multiplexed, a base station (or a network node) may configure and/or indicate, for both the transmissions of the third UE-to-base station physical shared channel repetition (e.g., PUSCH repetition) and the transmissions of the fourth UE-to-base station physical shared channel repetition (e.g., PUSCH repetition), a redundancy version (e.g., RV) granularity that is 1 time the orthogonal cover code (e.g., OCC) length.

The [Proposal #01] may be applied in combination with one or more other proposals within a range in which operations of the present disclosure do not conflict.

### [Proposal #02]

According to an embodiment of the present disclosure, when a UE is able to apply an orthogonal cover code (e.g., OCC) between transmissions of UE-to-base station communication data channel repetition (e.g., PUSCH repetition) (in a time domain) during UE-to-base station communication data channel transmission (e.g., PUSCH transmission), if UE-to-base station control channel transmission (e.g., physical uplink control channel transmission (PUCCH transmission)) occurs at a UE-to-base station communication data channel transmission (e.g., PUSCH transmission) time point to which the orthogonal cover code (e.g., OCC) is applied (or during a time interval related to a resource in which the transmission is performed), a method for supporting multiplexing through one or more of the following schemes may be provided.
(1) A scheme in which a UE first performs UE-to-base station communication multiplexing rules (e.g., UL multiplexing rules) when an orthogonal cover code (e.g., OCC) is not applied, and then performs an additional exception handling procedure when the orthogonal cover code (e.g., OCC) is applied.
   For example, according to the scheme, after UE-to-base station communication multiplexing rules (e.g., UL multiplexing rules) when an orthogonal cover code (e.g., OCC) is not applied are first performed, if UE-to-base station control information (e.g., uplink control information (UCI)) is included in a (specific) repeated transmission of a UE-to-base station communication data channel (e.g., PUSCH), suitability of a processing time for UE-to-base station control information (e.g., UCI) piggyback is (re-)checked based on the first transmission time point within a resource group to which the same orthogonal cover code (e.g., OCC) as the repeated transmission is applied, and then, if the processing time is suitable (sufficient), the UE-to-base station control information (e.g., UCI) is repeatedly transmitted within the resource group to which the orthogonal cover code (e.g., OCC) is applied, and otherwise, corresponding UE-to-base station data transmissions (e.g., PUSCH transmissions) may be omitted.
(2) A scheme of defining a UE-to-base station communication multiplexing rule (e.g., a UL multiplexing rule) when a UE applies an orthogonal cover code (e.g., OCC) separately from a UE-to-base station communication multiplexing rule (e.g., a UL multiplexing rule) when the UE doesn't apply an orthogonal cover code (e.g., OCC).

For example, when an orthogonal cover code (e.g., OCC) is applied, a UE-to-base station communication multiplexing rule (e.g., UL multiplexing rule) considering a processing time based on a first UE-to-base station communication data channel (e.g., PUSCH) of a resource group to which the orthogonal cover code (e.g., OCC) is applied may be defined.

Here, the UE-to-base station communication multiplexing rule (e.g., UL multiplexing rule) may refer to an operation performed by a UE when transmission period(s) of a plurality of different UE-to-base station transmission channel(s) (e.g., PUCCH or PUSCH) (from the same UE) overlap (in a time domain).

Here, application of an orthogonal cover code (e.g., OCC) between UE-to-base station communication data channel repetitions (e.g., PUSCH repetitions) (in a time domain) may refer to an operation of applying the orthogonal cover code (e.g., OCC) in units of repeated transmissions.

Here, whether the orthogonal cover code (e.g., OCC) is applied may be configured and/or indicated by a base station.

According to an embodiment of the present disclosure, assuming that a UE performs UE-to-base station communication data channel transmission (e.g., PUSCH transmission), a method in which the UE repeatedly performs the UE-to-base station communication data channel transmission (e.g., PUSCH transmission) (in a time domain) and applies a (time domain) orthogonal cover code (e.g., OCC) between the repeated transmissions may be provided.

Here, the (time domain) orthogonal cover code (e.g., OCC) may be for a purpose of multiplexing one or more UE-to-base station communication data channel transmissions (e.g., PUSCH transmissions) (within the same cell).

Here, when an orthogonal cover code (e.g., OCC) is applied between transmissions of the UE-to-base station communication data channel repetition (e.g., PUSCH repetition), two directions of the UE-to-base station communication multiplexing rule (e.g., UL multiplexing rule) may be considered. Here, the UE-to-base station communication multiplexing rule (e.g., UL multiplexing rule) may include an operation of a UE when transmission of UE-to-base station communication data channel(s) (e.g., PUSCH) and UE-to-base station control channel(s) (e.g., PUCCH) overlap (in a time domain).

According to an embodiment of the present disclosure, a method in which a UE first performs a UE-to-base station communication multiplexing rule (e.g., UL multiplexing rule) when an orthogonal cover code (e.g., OCC) is not applied, and then performs an additional exception handling procedure when the orthogonal cover code (e.g., OCC) is applied may be provided.

For example, after a UE-to-base station communication multiplexing rule (e.g., UL multiplexing rule) when an orthogonal cover code (e.g., OCC) is not applied is first performed, if UE-to-base station control information (e.g., UCI) is included in a (specific) repeated transmission of a UE-to-base station communication data channel (e.g., PUSCH), suitability of a processing time for UE-to-base station control information (e.g., UCI) piggyback is (re-)checked based on the first transmission time point within a resource group to which the same orthogonal cover code (e.g., OCC) as the repeated transmission is applied, and then, if the processing time is suitable (sufficient), the UE-to-base station control information (e.g., UCI) is repeatedly transmitted within the resource group to which the orthogonal cover code (e.g., OCC) is applied, and otherwise, corresponding UE-to-base station data transmissions (e.g., PUSCH transmissions) may be omitted.

According to an embodiment of the present disclosure, a method of defining a UE-to-base station communication multiplexing rule (e.g., UL multiplexing rule) when a UE applies an orthogonal cover code (e.g., OCC) separately from a UE-to-base station communication multiplexing rule (e.g., UL multiplexing rule) when the UE doesn't apply an orthogonal cover code (e.g., OCC) may be provided. For example, a UE-to-base station communication multiplexing rule (e.g., UL multiplexing rule) considering a processing time based on a first UE-to-base station communication data channel (e.g., PUSCH) of a resource group to which the orthogonal cover code (e.g., OCC) is applied when an orthogonal cover code (e.g., OCC) is applied may be defined.

According to the proposal of the present disclosure, there may be an advantage that a UE-to-base station communication multiplexing rule (e.g., UL multiplexing rule) can be supported when a UE is able to apply an orthogonal cover code (e.g., OCC) between transmissions of UE-to-base station communication data channel repetition (e.g., PUSCH repetition) (in a time domain) during UE-to-base station communication data channel transmission (e.g., PUSCH transmission).

As an additional operation for the proposal, according to an embodiment of the present disclosure, a method is proposed in which a base station (or a network node) (pre-)defines, configures, and/or indicates, to a UE, a time margin (hereinafter, a first time margin), and the UE, when performing UE-to-base station control information (e.g., UCI) multiplexing (and/or UE-to-base station control information (e.g., UCI) multiplexing and/or UE-to-base station control information (e.g., UCI) on a UE-to-base station physical shared channel (e.g., PUSCH) and/or UE-to-base station control information (e.g., UCI) piggyback), determines whether to perform UE-to-base station control information (e.g., UCI) multiplexing based on a computation time (and/or a processing time, and/or a timeline) condition (hereinafter, a first condition) required for performing the operation and a computation time (and/or a processing time, and/or a timeline) condition (hereinafter, a second condition) obtained by adding the first time margin to the first condition.

Here, the first time margin may be positive or negative. For example, in a non-terrestrial network according to an embodiment of the present disclosure, understanding of relative timing (and/or timing advance (e.g., Timing Advance (TA))) between base station-to-UE communication (e.g., DL communication) and UE-to-base station communication (e.g., UL communication) between a base station (or a network node) and a UE may be different.

In the case, the UE may perform UE-to-base station control information (e.g., UCI) multiplexing that is not expected by the base station (or a network node). If the first time margin is sufficiently large to include a degree of mismatch in timing advance (e.g., TA) between the base station (or a network node) and the UE, and the UE determines whether to perform UE-to-base station control information (e.g., UCI) multiplexing based on the second condition, understanding and/or determination regarding whether to perform UE-to-base station control information (e.g., UCI) multiplexing between the base station (or a network node) and the UE may match and/or be aligned.

Here, the UE may conservatively not perform UE-to-base station control information (e.g., UCI) multiplexing even when UE-to-base station control information (e.g., UCI) multiplexing is possible based on a computation time (and/or a processing time, and/or a timeline) condition actually required for UE-to-base station control information (e.g., UCI) multiplexing.

The [Proposal #02] may be applied in combination with one or more other proposals within a range in which operations of the present disclosure do not conflict.

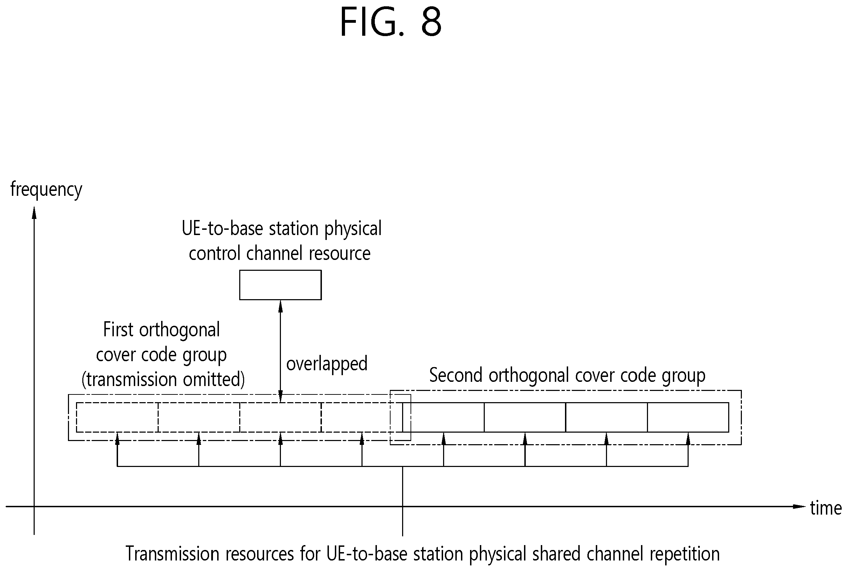

FIG. 8 shows transmission resources for UE-to-base station physical shared channel repetition (e.g., PUSCH repetition) to which an orthogonal cover code (e.g., OCC) is applied, according to an embodiment of the present disclosure. The embodiment of FIG. 8 may be combined with various embodiments of the present disclosure.

Referring to FIG. 8, transmission resources for UE-to-base station physical shared channel repetition to which an orthogonal cover code (e.g., OCC) having an orthogonal cover code (e.g., OCC) length of 4 is applied are shown. For example, in the UE-to-base station physical shared channel repetition (e.g., PUSCH repetition), UE-to-base station physical shared channel transmission may be performed 8 times. For example, since the orthogonal cover code (e.g., OCC) length is 4, there may be two orthogonal cover code (e.g., OCC) groups. In the present embodiment, the orthogonal cover code (e.g., OCC) groups may include a first orthogonal cover code (e.g., OCC) group and a second orthogonal cover code (e.g., OCC) group.

In the present embodiment, it is assumed that some of resources within the first orthogonal cover code (e.g., OCC) group temporally overlap with UE-to-base station physical control channel (e.g., PUCCH) resources. In this case, the UE performing the UE-to-base station physical shared channel repetition (e.g., PUSCH repetition) may omit (or drop) transmissions based on the first orthogonal cover code (e.g., OCC) group (for example, according to various embodiments described in the present disclosure). This may be because information transmitted through UE-to-base station physical control channel transmission (e.g., PUCCH transmission) may be more important than data to be transmitted through UE-to-base station physical shared channel transmission (e.g., PUSCH transmission).

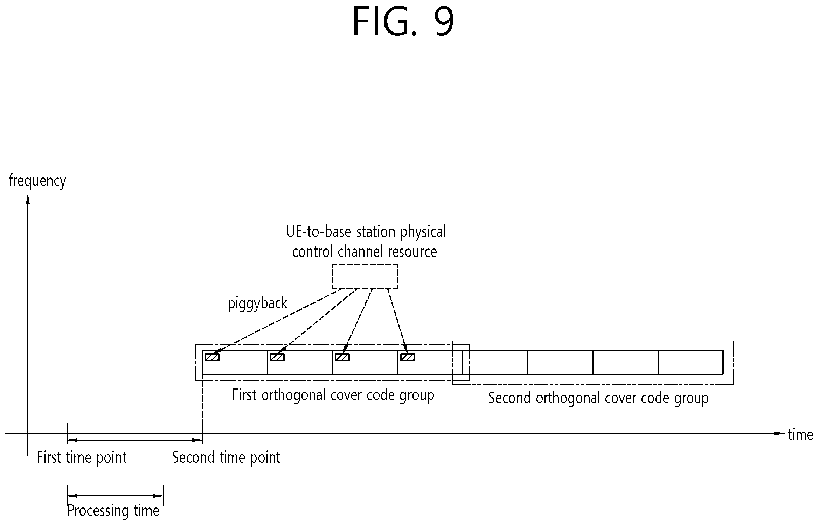

FIG. 9 shows a piggyback operation when a resource for UE-to-base station physical control channel transmission (e.g., PUCCH transmission) overlaps with a resource for UE-to-base station physical shared channel repetition (e.g., PUSCH repetition), according to an embodiment of the present disclosure. The embodiment of FIG. 9 may be combined with various embodiments of the present disclosure.

Referring to FIG. 9, transmission resources for UE-to-base station physical shared channel repetition to which an orthogonal cover code (e.g., OCC) having an orthogonal cover code (e.g., OCC) length of 4 is applied are shown. For example, in the UE-to-base station physical shared channel repetition (e.g., PUSCH repetition), UE-to-base station physical shared channel transmission may be performed 8 times. For example, since the orthogonal cover code (e.g., OCC) length is 4, there may be two orthogonal cover code (e.g., OCC) groups. In the present embodiment, the orthogonal cover code (e.g., OCC) groups may include a first orthogonal cover code (e.g., OCC) group and a second orthogonal cover code (e.g., OCC) group.

Here, a UE to perform the UE-to-base station physical shared channel repetition (e.g., PUSCH repetition) may determine, at a first time point, that a resource for UE-to-base station physical control channel transmission (e.g., PUCCH transmission) overlaps with the resources for the UE-to-base station physical shared channel repetition (e.g., PUSCH repetition) (particularly, the first orthogonal cover code (e.g., OCC) group).

Here, for example, when a time interval between a second time point, which is a start time point of the first orthogonal cover code (e.g., OCC) group, and the first time point is greater than or equal to a processing time (pre-)configured for the UE (in the present embodiment, it is assumed that the time interval is greater than or equal to the processing time (pre-)configured for the UE), the UE may piggyback (or multiplex) the UE-to-base station physical control channel transmission (e.g., PUCCH transmission) on the UE-to-base station physical shared channel repetition (e.g., PUSCH repetition) and transmit them together.

Accordingly, when a processing time required for a piggyback (or a multiplexing) operation is secured, both UE-to-base station physical shared channel repetition (e.g., PUSCH repetition) and UE-to-base station physical control channel transmission (e.g., PUCCH transmission) may be performed, thereby improving efficiency of radio resources.

### [Proposal #03]

According to an embodiment of the present disclosure, when a UE is able to apply an orthogonal cover code (e.g., OCC) to a UE-to-base station communication data channel (e.g., PUSCH) (and/or repeated transmission thereof), or when a UE is able to apply an orthogonal cover code (e.g., OCC) between transmissions of UE-to-base station communication data channel repetition (e.g., PUSCH repetition), if UE-to-base station control information transmission (e.g., UCI transmission) is included in some of the repeated transmissions (for example, UE-to-base station control information (e.g., UCI) on a UE-to-base station physical shared channel (e.g., PUSCH), or UE-to-base station control information (e.g., UCI) piggyback) (or if some of the repeated transmissions and UE-to-base station control information transmission (e.g., UCI transmission) overlap in a time domain), a method in which the UE performs one or more of the following operations may be provided.
(1) Not applying or partially applying an orthogonal cover code (e.g., OCC).
(2) Omitting (all) transmissions of UE-to-base station physical shared channel repetition (e.g., PUSCH repetition) related to an orthogonal cover code (e.g., OCC)-applied resource group (including transmissions of UE-to-base station physical shared channel repetition (e.g., PUSCH repetition) for UE-to-base station control information (e.g., UCI) transmission).
(3) Repeatedly transmitting the UE-to-base station control information (e.g., UCI) in (all) transmissions of UE-to-base station physical shared channel repetition (e.g., PUSCH repetition) related to an orthogonal cover code (e.g., OCC)-applied resource group (including transmissions of UE-to-base station physical shared channel repetition (e.g., PUSCH repetition) for UE-to-base station control information (e.g., UCI) transmission).

Here, application of an orthogonal cover code (e.g., OCC) between UE-to-base station communication data channel repetitions (e.g., UE-to-base station physical shared channel (e.g., PUSCH) repetitions) (in a time domain) may refer to an operation of applying the orthogonal cover code (e.g., OCC) in units of repeated transmissions.

Here, whether the orthogonal cover code (e.g., OCC) is applied may be configured and/or indicated by a base station.

According to an embodiment of the present disclosure, assuming that a UE performs UE-to-base station communication data channel transmission (e.g., PUSCH transmission), a method in which the UE repeatedly performs the UE-to-base station communication data channel transmission (e.g., PUSCH transmission) (in a time domain) and applies a (time domain) orthogonal cover code (e.g., OCC) between the repeated transmissions may be provided.

Here, the (time domain) orthogonal cover code (e.g., OCC) may be for a purpose of multiplexing one or more UE-to-base station communication data channel transmissions (e.g., PUSCH transmissions) (within the same cell). Here, as one of conditions for applying an orthogonal cover code (e.g., OCC), a UE may repeatedly generate and/or map the same signal for a unit to which the orthogonal cover code (e.g., OCC) is applied.

When a UE repeatedly transmits a UE-to-base station physical shared channel (e.g., PUSCH), a case may occur in which transmission time point(s) (or time interval(s) during which the transmission(s) are to be performed) of some repeated transmission(s) overlap with a UE-to-base station control channel (e.g., PUCCH), such that the repeated transmission(s) (or the time interval(s) during which the transmission(s) are to be performed) are required to include UE-to-base station control information (e.g., UCI) transmission.

Here, when a UE applies an orthogonal cover code (e.g., OCC) between transmissions of UE-to-base station communication data channel repetition (e.g., PUSCH repetition) (in a time domain) during UE-to-base station communication data channel transmission (e.g., PUSCH transmission), if only some (repeated) transmissions within a resource group to which the orthogonal cover code (e.g., OCC) is applied include UE-to-base station control information (e.g., UCI) transmission, a same signal repetition condition, which is one of conditions for applying the orthogonal cover code (e.g., OCC), may be violated.

Therefore, according to an embodiment of the present disclosure, when a UE is able to apply an orthogonal cover code (e.g., OCC) between transmissions of UE-to-base station communication data channel repetition (e.g., PUSCH repetition) (in a time domain) during UE-to-base station communication data channel transmission (e.g., PUSCH transmission), if UE-to-base station control information transmission (e.g., UCI transmission) is included in some of the repeated transmission(s) (for example, UE-to-base station control information (e.g., UCI) on a UE-to-base station physical shared channel (e.g., PUSCH) or UE-to-base station control information (e.g., UCI) piggyback), a method is proposed in which the UE performs one or more of the following operations.
(1) Not applying or partially applying an orthogonal cover code (e.g., OCC).
(2) Omitting (all) transmissions of UE-to-base station physical shared channel repetition (e.g., PUSCH repetition) related to an orthogonal cover code (e.g., OCC)-applied resource group (including transmissions of UE-to-base station physical shared channel repetition (e.g., PUSCH repetition) for UE-to-base station control information (e.g., UCI) transmission).
(3) Repeatedly transmitting the UE-to-base station control information (e.g., UCI) in (all) transmissions of UE-to-base station physical shared channel repetition (e.g., PUSCH repetition) related to an orthogonal cover code (e.g., OCC)-applied resource group (including transmissions of UE-to-base station physical shared channel repetition (e.g., PUSCH repetition) for UE-to-base station control information (e.g., UCI) transmission).

Here, when a UE performs UE-to-base station physical shared channel repetition (e.g., PUSCH repetition), if a condition for applying an orthogonal cover code (e.g., OCC) is violated due to UE-to-base station control information (e.g., UCI) transmission within (some) transmission(s) of the UE-to-base station physical shared channel repetition (e.g., PUSCH repetition) (or a time interval during which the (some) transmission(s) are performed), the UE may satisfy the condition for applying the orthogonal cover code (e.g., OCC) by disabling application of the orthogonal cover code (e.g., OCC), omitting transmission(s) of the related UE-to-base station physical shared channel repetition (e.g., PUSCH repetition), or repeatedly transmitting the UE-to-base station control information (e.g., UCI) within an orthogonal cover code (e.g., OCC)-applied resource group.

According to the proposal of the present disclosure, there may be an advantage of clarifying an operation of a UE by defining an exception handling operation in a situation in which some of conditions for applying an orthogonal cover code (e.g., OCC) are violated due to UE-to-base station control information (e.g., UCI) on a UE-to-base station physical shared channel (e.g., PUSCH) (or UE-to-base station control information (e.g., UCI) piggyback).

The [Proposal #03] may be applied in combination with one or more other proposals within a range in which operations of the present disclosure do not conflict.

### [Proposal #04]

According to an embodiment of the present disclosure, when a UE is able to apply an orthogonal cover code (e.g., OCC) to a UE-to-base station communication data channel (e.g., PUSCH) (and/or repeated transmission thereof), a method may be provided in which a base station indicates, to the UE, one or more of the following pieces of information by using a time domain resource allocation field (for example, a time domain resource allocation (e.g., TDRA; Time Domain Resource Allocation) field) (for the UE-to-base station communication data channel (e.g., PUSCH)) in a dynamic control channel (for example, PDCCH and/or base station-to-UE control information (e.g., DCI)) and/or a redundant field generated by application of the orthogonal cover code (e.g., OCC) (for example, part and/or all of a redundancy version (e.g., RV) field).
(1) An orthogonal cover code (e.g., OCC) type
(2) An orthogonal cover code (e.g., OCC) length
(3) An orthogonal cover code (e.g., OCC) index

For example, a specific state indicated by the time domain resource allocation field (e.g., TDRA field) may indicate a configuration combination including time domain resource allocation, and the configuration combination may be a combination including an orthogonal cover code (e.g., OCC) type, an orthogonal cover code (e.g., OCC) length, and/or an orthogonal cover code (e.g., OCC) index.

Here, whether the orthogonal cover code (e.g., OCC) is applied may be configured and/or indicated by a base station.

Here, the orthogonal cover code (e.g., OCC) may be applied between repeated transmissions.

Here, the application period of the orthogonal cover code (e.g., OCC) may depend on an orthogonal cover code (e.g., OCC) application unit and/or an orthogonal cover code (e.g., OCC) length configuration.

Here, for example, when an orthogonal cover code (e.g., OCC) is applied to the UE-to-base station communication data channel (e.g., PUSCH), the time domain resource allocation field (e.g., TDRA field) may be extended to include a redundant field generated by application of the orthogonal cover code (e.g., OCC) (for example, a redundancy version (e.g., RV) field).

Here, the redundant field generated by application of the orthogonal cover code (e.g., OCC) may refer to bit(s) generated as a use of an existing field is reduced or eliminated according to application of the orthogonal cover code (e.g., OCC). For example, when the orthogonal cover code (e.g., OCC) is applied, since a redundancy version (e.g., RV) value is to be repeatedly applied, part and/or all of a redundancy version (e.g., RV) field may not be used, and in the case, part or all of the redundancy version (e.g., RV) field may be included in the redundant field.

Here, for example, in order to support dynamic scheduling for an orthogonal cover code (e.g., OCC) index resource, an orthogonal cover code (e.g., OCC) type and/or an orthogonal cover code (e.g., OCC) length may be indicated through the time domain resource allocation field (e.g., TDRA field), and an orthogonal cover code (e.g., OCC) index may be indicated by using a separate field (for example, a redundancy version (e.g., RV) field) independent of time domain resource allocation (e.g., TDRA).

Here, the orthogonal cover code (e.g., OCC) type may include an orthogonal cover code (e.g., OCC) type applied within a single UE-to-base station physical shared channel (e.g., PUSCH), an orthogonal cover code (e.g., OCC) type applied to UE-to-base station physical shared channel (e.g., PUSCH) repetition type A, and/or an orthogonal cover code (e.g., OCC) type applied to UE-to-base station physical shared channel (e.g., PUSCH) repetition type B.

Here, for example, the orthogonal cover code (e.g., OCC) type may be implicitly determined according to a UE-to-base station physical shared channel (e.g., PUSCH) transmission form (for example, single transmission and/or repeated transmission) and whether application of the orthogonal cover code (e.g., OCC) is configured, without separate configuration and/or indication.

According to an embodiment of the present disclosure, assuming that a UE performs UE-to-base station communication data channel transmission (e.g., PUSCH transmission), a method in which the UE repeatedly performs the UE-to-base station communication data channel transmission (e.g., PUSCH transmission) (in a time domain) and applies a (time domain) orthogonal cover code (e.g., OCC) between the repeated transmissions may be provided.

Here, the (time domain) orthogonal cover code (e.g., OCC) may be for a purpose of multiplexing one or more UE-to-base station communication data channel transmissions (e.g., PUSCH transmissions) (within the same cell).

Here, when the UE-to-base station communication data channel (e.g., PUSCH) to which the orthogonal cover code (e.g., OCC) is applied is scheduled through dynamic control information, components of the orthogonal cover code (e.g., OCC) applied to the UE-to-base station communication data channel (e.g., PUSCH) (for example, an orthogonal cover code (e.g., OCC) type, an orthogonal cover code (e.g., OCC) length, and/or an orthogonal cover code (e.g., OCC) index) may be indicated through the dynamic control information.

Here, for example, the orthogonal cover code (e.g., OCC) may be linked to time domain repeated transmission of the UE-to-base station communication data channel (e.g., PUSCH), and the repeated transmission information may be indicated through a time domain resource allocation field (for example, time domain resource allocation (e.g., TDRA)) (for the UE-to-base station communication data channel (e.g., PUSCH)) in dynamic control information.

Here, for example, a base station may also indicate orthogonal cover code (e.g., OCC) information through the time domain resource allocation field (for the UE-to-base station communication data channel (e.g., PUSCH)) in the dynamic control information.

For example, a specific state indicated by the time domain resource allocation field (e.g., TDRA field) may indicate a configuration combination including time domain resource allocation, and the configuration combination may be a combination including an orthogonal cover code (e.g., OCC) type, an orthogonal cover code (e.g., OCC) length, and/or an orthogonal cover code (e.g., OCC) index.

Here, for example, orthogonal cover code (e.g., OCC) information (for example, an orthogonal cover code (e.g., OCC) type, an orthogonal cover code (e.g., OCC) length, and/or an orthogonal cover code (e.g., OCC) index) for each state of the time domain resource allocation (e.g., TDRA) may be (pre-)configured and/or (pre-)defined by a base station for a UE.

Here, when components of the orthogonal cover code (e.g., OCC) (for example, an orthogonal cover code (e.g., OCC) type, an orthogonal cover code (e.g., OCC) length, and/or an orthogonal cover code (e.g., OCC) index) are indicated, a redundant field generated by application of the orthogonal cover code (e.g., OCC) (for example, part and/or all of a redundancy version (e.g., RV) field) may be used.

For example, when the orthogonal cover code (e.g., OCC) is applied, since a redundancy version (e.g., RV) value is to be repeatedly applied, part and/or all of a redundancy version (e.g., RV) field may not be used, and in the case, part and/or all of the redundancy version (e.g., RV) field may be included in the redundant field.

Here, for example, a base station may indicate components of an orthogonal cover code (e.g., OCC) (for example, an orthogonal cover code (e.g., OCC) type, an orthogonal cover code (e.g., OCC) length, and/or an orthogonal cover code (e.g., OCC) index) by using a time domain resource allocation field (for example, a time domain resource allocation (e.g., TDRA) field) (for the UE-to-base station communication data channel (e.g., PUSCH)) and/or a redundant field generated by application of the orthogonal cover code (e.g., OCC) (for example, part and/or all of a redundancy version (e.g., RV) field).

For example, an extended time domain resource allocation field (e.g., TDRA field) may be formed by adding a redundant field (for example, a redundancy version (e.g., RV) field) to an existing time domain resource allocation field (e.g., TDRA field), and components of an orthogonal cover code (e.g., OCC) may then be indicated through the extended time domain resource allocation field (e.g., TDRA field).

For example, an orthogonal cover code (e.g., OCC) type and/or an orthogonal cover code (e.g., OCC) length may be indicated through the time domain resource allocation field (e.g., TDRA field), and an orthogonal cover code (e.g., OCC) index may be indicated by using a separate field (for example, a redundancy version (e.g., RV) field) independent of time domain resource allocation (e.g., TDRA).

According to the proposal of the present disclosure, there may be an advantage that, when a (time domain) orthogonal cover code (e.g., OCC) is applied to a UE-to-base station communication data channel (e.g., PUSCH) (and/or repeated transmission thereof), components of the orthogonal cover code (e.g., OCC) (for example, an orthogonal cover code (e.g., OCC) type, an orthogonal cover code (e.g., OCC) length, and/or an orthogonal cover code (e.g., OCC) index) may be efficiently indicated by using a time domain resource allocation field (for example, time domain resource allocation (e.g., TDRA)) and/or a redundant field (for example, a redundancy version (e.g., RV) field) (of a case where the orthogonal cover code (e.g., OCC) is applied).

The [Proposal #04] may be applied in combination with one or more other proposals within a range in which operations of the present disclosure do not conflict.

### [Proposal #05]

According to an embodiment of the present disclosure, when a UE is able to apply an orthogonal cover code (e.g., OCC) to a UE-to-base station communication data channel (e.g., PUSCH) (and/or repeated transmission thereof), if the UE-to-base station communication data channel (e.g., PUSCH) to which the orthogonal cover code (e.g., OCC) is applied overlaps and/or conflicts with a UE-to-base station control channel (e.g., PUCCH) (in a time domain), a method in which one or more of the following operations are performed may be provided.
(1) UE-to-base station control information (e.g., UCI) piggyback operation on a UE-to-base station physical shared channel (e.g., PUSCH).
(2) Omission of UE-to-base station physical shared channel (e.g., PUSCH) transmission.
(3) Omission of control information (UE-to-base station control information (e.g., UCI)) transmission.

Here, a base station may (pre-)agree with a UE, (pre-)configure the UE, and/or (dynamically) indicate to the UE, for whether to perform each of the operation(s).

Here, the omission of control information (UE-to-base station control information (e.g., UCI)) transmission may be determined and/or configured differently and/or independently according to a UE-to-base station control information (e.g., UCI) type. For example, when the UE-to-base station control information (e.g., UCI) is channel state information (e.g., CSI), omission of transmission may be allowed and/or configured, and when the UE-to-base station control information (e.g., UCI) is feedback information (e.g., HARQ-ACK), omission may not be allowed and/or configured.

According to an embodiment of the present disclosure, assuming that a UE performs UE-to-base station communication data channel transmission (e.g., PUSCH transmission), a method in which the UE repeatedly performs the UE-to-base station communication data channel transmission (e.g., PUSCH transmission) (in a time domain) and applies a (time domain) orthogonal cover code (e.g., OCC) between the repeated transmissions may be provided.

Here, the (time domain) orthogonal cover code (e.g., OCC) may be for a purpose of multiplexing one or more UE-to-base station communication data channel transmissions (e.g., PUSCH transmissions) (within the same cell).

Here, when a UE is to transmit a UE-to-base station control channel (e.g., PUCCH) that conflicts with transmissions of the UE-to-base station physical shared channel repetition (e.g., PUSCH repetition) to which the orthogonal cover code (e.g., OCC) is applied, the UE may transmit UE-to-base station control information (e.g., UCI), which is control information intended to be transmitted through the UE-to-base station physical control channel (e.g., PUCCH), by including the UE-to-base station control information (e.g., UCI) in the UE-to-base station physical shared channel (e.g., PUSCH) (e.g., UE-to-base station control information (e.g., UCI) piggyback).

Here, for example, when UE-to-base station control information (e.g., UCI) is included in and transmitted through some repeated transmissions among transmissions of the UE-to-base station physical shared channel repetition (e.g., PUSCH repetition) to which the orthogonal cover code (e.g., OCC) is applied, data repeated transmission is not maintained, and thus orthogonality of the orthogonal cover code (e.g., OCC) may not be guaranteed.

Therefore, the present disclosure proposes a method in which a base station prioritizes UE-to-base station physical shared channel (e.g., PUSCH) transmission to which the orthogonal cover code (e.g., OCC) is applied, as necessary.

According to an embodiment of the present disclosure, when a specific UE-to-base station control information (e.g., UCI) transmission conflicts with UE-to-base station physical shared channel (e.g., PUSCH) transmission to which the orthogonal cover code (e.g., OCC) is applied, a base station may configure and/or indicate a UE to omit the UE-to-base station control information (e.g., UCI) transmission, and the UE may omit control information (e.g., UE-to-base station control information (e.g., UCI)) transmission according to configuration and/or indication of the base station, and transmit the orthogonal cover code (e.g., OCC)-based UE-to-base station physical shared channel (e.g., PUSCH) in an intact form.

According to the embodiment of the present disclosure, overall system performance may be improved by allowing a base station to cause a UE to prioritize UE-to-base station communication data channel transmission (e.g., PUSCH transmission) to which the orthogonal cover code (e.g., OCC) is applied over a specific type of UE-to-base station control information (e.g., UCI) transmission.

The [Proposal #05] may be applied in combination with one or more other proposals within a range in which operations of the present disclosure do not conflict.

### [Proposal #06]

According to an embodiment of the present disclosure, when a UE is able to apply an orthogonal cover code (e.g., OCC) between transmissions of UE-to-base station communication data channel repetition (e.g., PUSCH repetition) (in a time domain) during UE-to-base station communication data channel transmission (e.g., PUSCH transmission), if a resource group to which the orthogonal cover code (e.g., OCC) is applied overlaps and/or conflicts with two or more UE-to-base station control channels (e.g., PUCCHs) (in a time domain), a method in which the UE supports one or more of the following operations may be provided.
(1) An operation of not expecting a (single) resource group to which an orthogonal cover code (e.g., OCC) is applied to overlap and/or conflict with two or more (different) UE-to-base station control information (e.g., UCI) (for example, when the case occurs, a UE may treat it as an error case).
(2) An operation of, when a (single) resource group to which an orthogonal cover code (e.g., OCC) is applied overlaps and/or conflicts with two or more (different) UE-to-base station control information (e.g., UCI), selecting and multiplexing a single UE-to-base station control information (e.g., UCI) according to one or more of the following UE-to-base station control information (e.g., UCI) prioritization rules.

i) The UE-to-base station control information (e.g., UCI) that is earlier in the time domain may have a higher priority.
ii) A UE-to-base station control information (e.g., UCI) having a larger payload size may have a higher priority. Alternatively, UE-to-base station control information (e.g., UCI) related to more data transmissions may have a higher priority.
iii) UE-to-base station control information (e.g., UCI) related to URLLC may have a higher priority. For example, UE-to-base station control information (e.g., UCI) having a higher priority index may have a higher priority.
iv) UE-to-base station control information (e.g., UCI) related to a higher retransmission number may have a higher priority.
v) UE-to-base station control information (e.g., UCI) related to data having an earlier scheduling time point may have a higher priority.
vi) Feedback transmission (e.g., HARQ-ACK transmission) may have a higher priority than channel state information (e.g., CSI) transmission.
vii) Beam reporting may have a higher priority than channel quality information (e.g., CQI; channel quality information), precoding matrix indicator (e.g., PMI; precoding matrix indicator), and/or rank indicator (e.g., RI; rank indicator).
viii) Rank indicator (e.g., RI) may have a higher priority than channel quality information (e.g., CQI) and/or precoding matrix indicator (e.g., PMI).
ix) Channel state information (e.g., CSI) related to a lower (or higher) channel state information (e.g., CSI) process index may have a higher priority.
x) Aperiodic UE-to-base station control information (e.g., UCI) may have a higher priority than periodic UE-to-base station control information (e.g., UCI).
xi) It may depend on UE implementation.

Here, for example, the UE-to-base station communication multiplexing rule (e.g., UL multiplexing rule) may refer to an operation performed by a UE when transmission interval(s) of a plurality of different UE-to-base station transmission channel(s) (e.g., PUCCH or PUSCH) (from the same UE) overlap (in a time domain).

Here, the above-described prioritization rule may be expanded and applied for the purpose of tie-breaking (Tie-breaking) even when two or more pieces of UE-to-base station control information (e.g., UCI) having the same priority overlap and/or conflict with a (single) resource group to which the orthogonal cover code (e.g., OCC) is applied.

Here, application of the orthogonal cover code (e.g., OCC) between UE-to-base station communication data channel repetitions (e.g., PUSCH repetitions) (in a time domain) may refer to an operation of applying the orthogonal cover code (e.g., OCC) on a repeated transmission unit.

Here, whether the orthogonal cover code (e.g., OCC) is applied may be configured and/or indicated by a base station.

Here, the UE may support multiplexing of one piece of UE-to-base station control information (e.g., UCI) within a resource group to which the orthogonal cover code (e.g., OCC) is applied.

Here, the UE-to-base station control information (e.g., UCI) may be feedback information (e.g., HARQ-ACK), channel state information (e.g., CSI), and/or scheduling request (e.g., SR; scheduling request).

According to an embodiment of the present disclosure, assuming that a UE performs UE-to-base station communication data channel transmission (e.g., PUSCH transmission), a method in which the UE repeatedly performs the UE-to-base station communication data channel transmission (e.g., PUSCH transmission) (in a time domain) and applies a (time domain) orthogonal cover code (e.g., OCC) between the repeated transmissions may be provided.

Here, the (time domain) orthogonal cover code (e.g., OCC) may be for a purpose of multiplexing one or more UE-to-base station communication data channel transmissions (e.g., PUSCH transmissions) (within the same cell).

Here, when one or more repeated transmissions among transmissions of UE-to-base station communication data channel repetition (e.g., PUSCH repetition) conflict and/or overlap with a UE-to-base station control channel (e.g., PUCCH) in a time domain, UE-to-base station control information (e.g., UCI) transmitted through the UE-to-base station control channel (e.g., PUCCH) may be multiplexed in the UE-to-base station physical shared channel (e.g., PUSCH). For example, the multiplexing may refer to a piggyback operation of UE-to-base station control information (e.g., UCI) on the UE-to-base station physical shared channel (e.g., PUSCH) or UE-to-base station control information (e.g., UCI).

Here, when UE-to-base station control information (e.g., UCI) is multiplexed within a resource group to which the orthogonal cover code (e.g., OCC) is applied, the UE-to-base station control information (e.g., UCI) transmission may also be repeatedly transmitted within the orthogonal cover code (e.g., OCC) application group.

Here, when a resource group to which the orthogonal cover code (e.g., OCC) is applied overlaps and/or conflicts with two or more UE-to-base station control channels (e.g., PUCCHs) and/or UE-to-base station control information (e.g., UCI) (in a time domain), repeatedly transmitting the plurality of UE-to-base station control information (e.g., UCI) in combination may cause an excessive feedback overhead from a UE-to-base station control information (e.g., UCI) feedback perspective.

Therefore, a method in which, when a UE is able to apply an orthogonal cover code (e.g., OCC) between transmissions of UE-to-base station communication data channel repetition (e.g., PUSCH repetition) (in a time domain) during UE-to-base station communication data channel transmission (e.g., PUSCH transmission), if a resource group to which the orthogonal cover code (e.g., OCC) is applied overlaps and/or conflicts with two or more UE-to-base station control channels (e.g., PUCCHs) (in a time domain), the UE supports one or more of the following operations, is proposed.
(1) An operation of not expecting a (single) resource group to which an orthogonal cover code (e.g., OCC) is applied to overlap and/or conflict with two or more (different) UE-to-base station control information (e.g., UCI) (for example, when the case occurs, a UE may treat it as an error case).
(2) An operation of, when a (single) resource group to which an orthogonal cover code (e.g., OCC) is applied overlaps and/or conflicts with two or more (different) UE-to-base station control information (e.g., UCI), selecting and multiplexing a single UE-to-base station control information (e.g., UCI) according to one or more of the following UE-to-base station control information (e.g., UCI) prioritization rules.

i) The UE-to-base station control information (e.g., UCI) that is earlier in the time domain may have a higher priority.
ii) A UE-to-base station control information (e.g., UCI) having a larger payload size may have a higher priority. Alternatively, UE-to-base station control information (e.g., UCI) related to more data transmissions may have a higher priority.
iii) UE-to-base station control information (e.g., UCI) related to URLLC may have a higher priority. For example, UE-to-base station control information (e.g., UCI) having a higher priority index may have a higher priority.
iv) UE-to-base station control information (e.g., UCI) related to a higher retransmission number may have a higher priority.
v) UE-to-base station control information (e.g., UCI) related to data having an earlier scheduling time point may have a higher priority.
vi) Feedback transmission (e.g., HARQ-ACK transmission) may have a higher priority than channel state information (e.g., CSI) transmission.
vii) Beam reporting may have a higher priority than channel quality information (e.g., CQI; channel quality information), precoding matrix indicator (e.g., PMI; precoding matrix indicator), and/or rank indicator (e.g., RI; rank indicator).
viii) Rank indicator (e.g., RI) may have a higher priority than channel quality information (e.g., CQI) and/or precoding matrix indicator (e.g., PMI).
ix) Channel state information (e.g., CSI) related to a lower (or higher) channel state information (e.g., CSI) process index may have a higher priority.
x) Aperiodic UE-to-base station control information (e.g., UCI) may have a higher priority than periodic UE-to-base station control information (e.g., UCI).
xi) It may depend on UE implementation.

According to the proposal of the present disclosure, there may be an advantage that a UE-to-base station communication multiplexing rule (e.g., UL multiplexing rule) is supported when a UE is able to apply an orthogonal cover code (e.g., OCC) between transmissions of UE-to-base station communication data channel repetition (e.g., PUSCH repetition) (in a time domain) during UE-to-base station communication data channel transmission (e.g., PUSCH transmission).

As an additional proposal of the present disclosure, according to an embodiment of the present disclosure, a method in which, when a UE is able to apply an orthogonal cover code (e.g., OCC) between transmissions of UE-to-base station communication data channel repetition (e.g., PUSCH repetition) (in a time domain) during UE-to-base station communication data channel transmission (e.g., PUSCH transmission), if a resource group to which the orthogonal cover code (e.g., OCC) is applied overlaps and/or conflicts with two or more UE-to-base station control channels (e.g., PUCCHs) (in a time domain), the UE supports UE-to-base station control information (e.g., UCI) multiplexing step by step as follows, is proposed.
(1) Step 1: Priority-based payload selection and/or payload multiplexing per UE-to-base station control information (e.g., UCI) type.
(2) Step 2: Multiplexing coded symbols/bits for different UE-to-base station control information (e.g., UCI) types within a resource group to which the orthogonal cover code (e.g., OCC) is applied.

Here, the UE-to-base station control information (e.g., UCI) type may include feedback information (e.g., HARQ-ACK), channel state information (e.g., CSI), and/or scheduling request (e.g., SR), etc.

Here, multiplexing within a resource group to which the orthogonal cover code (e.g., OCC) is applied may include a process of repeatedly transmitting UE-to-base station control information (e.g., UCI) within the resource group to which the orthogonal cover code (e.g., OCC) is applied.

Here, when two or more (conflicting) specific UE-to-base station control information (e.g., UCI) types are present, the UE may omit (UE-to-base station physical shared channel (e.g., PUSCH)) transmission for the resource group to which the orthogonal cover code (e.g., OCC) is applied, and perform UE-to-base station physical control channel transmission (e.g., PUCCH transmission). For example, the specific UE-to-base station control information (e.g., UCI) type may be feedback information (e.g., HARQ-ACK).

Here, whether to perform priority-based payload selection or payload multiplexing per UE-to-base station control information (e.g., UCI) type may depend on configuration of a base station (or a network node).

The [Proposal #06] may be applied in combination with one or more other proposals within a range in which operations of the present disclosure do not conflict.

### [Proposal #07]

According to an embodiment of the present disclosure, when a UE is able to apply an orthogonal cover code (e.g., OCC) between transmissions of UE-to-base station communication data channel repetition (e.g., PUSCH repetition) (in a time domain) during UE-to-base station communication data channel transmission (e.g., PUSCH transmission), if a resource group to which the orthogonal cover code (e.g., OCC) is applied (hereinafter, a first orthogonal cover code (e.g., OCC) group) overlaps and/or conflicts with one or more UE-to-base station control channels (e.g., PUCCHs) (in a time domain), and a resource group to which the orthogonal cover code (e.g., OCC) is applied after the first orthogonal cover code (e.g., OCC) group (hereinafter, a second orthogonal cover code (e.g., OCC) group) exists, a method in which the UE supports one or more of the following operations may be provided.
(1) An operation of delaying transmission of part and/or all of UE-to-base station control information (e.g., UCI) in a UE-to-base station physical control channel (e.g., PUCCH) and multiplexing the delayed transmission with a second orthogonal cover code (e.g., OCC) group (for example, an operation of, by delaying transmission of part and/or all of UE-to-base station control information (e.g., UCI), causing the delayed transmission to be multiplexed with a next orthogonal cover code (e.g., OCC) group rather than an overlapping orthogonal cover code (e.g., OCC) group).

Here, for example, the UE operation may be applied when UE-to-base station control information (e.g., UCI) multiplexing within the first orthogonal cover code (e.g., OCC) group is not supported. For example, the UE operation may be applied when processing time for UE-to-base station control information (e.g., UCI) multiplexing is insufficient and/or when UE-to-base station control information (e.g., UCI) transmission is to be omitted due to priority, or the like.

Here, the second orthogonal cover code (e.g., OCC) group may be a resource group in which processing time (and/or timeline) for UE-to-base station control information (e.g., UCI) multiplexing is guaranteed.

Here, the second orthogonal cover code (e.g., OCC) group may be a resource group including (at least) the delayed first UE-to-base station control information (e.g., UCI) or including only the delayed first UE-to-base station control information (e.g., UCI).

Here, for a specific type of UE-to-base station control information (e.g., UCI) (hereinafter, first UE-to-base station control information (e.g., UCI)), the UE may, while delaying transmission of the first UE-to-base station control information (e.g., UCI), select, as the second orthogonal cover code (e.g., OCC) group, an orthogonal cover code (e.g., OCC) group that does not include (at least) UE-to-base station control information (e.g., UCI) of the same type as the first UE-to-base station control information (e.g., UCI) and/or does not include any UE-to-base station control information (e.g., UCI), and may multiplex the first UE-to-base station control information (e.g., UCI) into the second orthogonal cover code (e.g., OCC) group.

Here, for a specific type of UE-to-base station control information (e.g., UCI) (hereinafter, first UE-to-base station control information (e.g., UCI)), the UE may, while delaying transmission of the first UE-to-base station control information (e.g., UCI), select, as the second orthogonal cover code (e.g., OCC) group, an orthogonal cover code (e.g., OCC) group that includes only (at least) UE-to-base station control information (e.g., UCI) of the same type as the first UE-to-base station control information (e.g., UCI) and/or includes only (at least) UE-to-base station control information (e.g., UCI) of a type predefined, configured, and/or indicated in advance, and may multiplex the first UE-to-base station control information (e.g., UCI) into the second orthogonal cover code (e.g., OCC) group (or multiplex the first UE-to-base station control information (e.g., UCI) with the second orthogonal cover code (e.g., OCC) group).

Here, the UE may selectively apply the operation according to UE-to-base station control information (e.g., UCI) type. For example, when the UE-to-base station control information (e.g., UCI) includes feedback information (e.g., HARQ-ACK) and/or channel state information (e.g., CSI), the channel state information (e.g., CSI) may be multiplexed into the first orthogonal cover code (e.g., OCC) group, and the feedback information (e.g., HARQ-ACK) may be multiplexed into the first orthogonal cover code (e.g., OCC) group or the second orthogonal cover code (e.g., OCC) group according to processing time (and/or timeline).

Here, when the UE is unable to find a suitable second orthogonal cover code (e.g., OCC) group (for a certain period of time), the UE may omit transmission of the delayed UE-to-base station control information (e.g., UCI).

Here, when the UE, after delaying the UE-to-base station control information (e.g., UCI), intends to multiplex the UE-to-base station control information (e.g., UCI) into an orthogonal cover code (e.g., OCC) group (within an adjacent or predefined time interval), if UE-to-base station control information (e.g., UCI) is already included in the orthogonal cover code (e.g., OCC) group, the UE may omit transmission of the delayed UE-to-base station control information (e.g., UCI).

Here, when searching for the second orthogonal cover code (e.g., OCC) group, the UE may utilize UE-to-base station physical shared channel (e.g., PUSCH) transmission resource(s) based on different grants and/or configurations. Alternatively, for example, when the UE searches for the second orthogonal cover code (e.g., OCC) group, the UE may perform the search only within transmissions of the same UE-to-base station physical shared channel repetition (e.g., PUSCH repetition) as the first orthogonal cover code (e.g., OCC) group.

Here, the orthogonal cover code (e.g., OCC) group may refer to a UE-to-base station physical shared channel (e.g., PUSCH) resource group to which the orthogonal cover code (e.g., OCC) is applied.

The [Proposal #07] may be applied in combination with one or more other proposals within a range in which operations of the present disclosure do not conflict.

The proposed method may be applied to a device described below. First, a processor 202 of a receiving UE may configure at least one bandwidth part (e.g., BWP). Then, the processor 202 of the receiving UE may control a transceiver 206 of the receiving UE to receive, from a transmitting UE, an inter-UE communication (e.g., SL communication)-related physical channel and/or an inter-UE communication (e.g., SL communication)-related reference signal on the at least one bandwidth part (e.g., BWP).

Introduction of a non-terrestrial network (e.g., NTN; non-terrestrial network) utilizing a satellite or the like as a network node has been actively discussed. Satellites supporting the non-terrestrial network (e.g., NTN) may be classified according to flight orbit and characteristics of the satellites, into geostationary orbit (e.g., GEO; geostationary orbit), medium earth orbit (e.g., MEO; medium earth orbit), and low earth orbit (e.g., LEO; low earth orbit), and generally have a characteristic of a very high altitude.

Accordingly, a service area of the satellite may have a characteristic of very wide coverage, and the number of target UEs within the corresponding service area may be relatively large. Therefore, the non-terrestrial network (e.g., NTN) service may require support for multiplexing of a plurality of UE(s).

Here, since a terrestrial UE has a transmit power constraint, it may be necessary to apply a coverage enhancement technique in order to deliver a signal of a sufficient magnitude to a high-altitude non-terrestrial network (e.g., NTN) during UE-to-base station (e.g., UL) transmission. For example, the UE may achieve coverage enhancement by repeatedly transmitting a UE-to-base station physical shared channel (e.g., PUSCH; Physical Uplink Shared Channel), which is a UE-to-base station (e.g., UL) data channel, in a time domain.

Meanwhile, in the coverage enhancement technique, efficiency of resource utilization may be reduced due to repeated transmissions, and, in order to address this, a UE-to-base station communication (e.g., UL communication) multiplexing operation utilizing an orthogonal cover code (e.g., OCC; Orthogonal Cover Code) may be effective.

According to an embodiment of the present disclosure, a method of achieving capacity enhancement and/or multiplexing of a base station-to-UE physical shared channel (e.g., PUSCH) by applying an orthogonal cover code (e.g., OCC) during base station-to-UE transmission (e.g., UL transmission) in a non-terrestrial network may be provided.

Here, in particular, a method may be provided in which, when an orthogonal cover code (e.g., OCC) is applied between repeated transmissions of a base station-to-UE physical shared channel (e.g., PUSCH), if UE-to-base station control information (e.g., UCI) transmission overlaps with some base station-to-UE physical shared channel (e.g., PUSCH) transmissions, the entire base station-to-UE physical shared channel (e.g., PUSCH) repetition is omitted.

According to various embodiments of the present disclosure, in an environment in which an orthogonal cover code is applied, an advantageous effect may be achieved in that transmission of important data can be protected by allowing UE-to-base station control information, which may be more important than UE-to-base station shared channel transmission, to be transmitted.

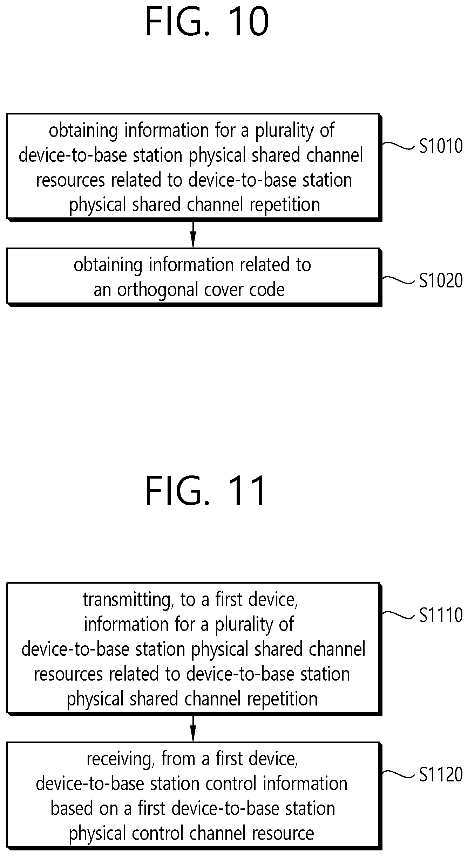

FIG. 10 shows a procedure of a method that may be performed by a first device, according to an embodiment of the present disclosure. The embodiment of FIG. 10 may be combined with various embodiments of the present disclosure.

Referring to FIG. 10, in step S1010, a first device may obtain information for a plurality of device-to-base station physical shared channel resources related to device-to-base station physical shared channel repetition. In step S1020, the first device may obtain information related to an orthogonal cover code. For example, the plurality of device-to-base station physical shared channel resources include at least one orthogonal cover code group to which the orthogonal cover code may be applied, and wherein, based on an overlap between a first device-to-base station physical shared channel resource in a first orthogonal cover code group among the at least one orthogonal cover code group and a first device-to-base station physical control channel resource on which device-to-base station control information is to be transmitted, all device-to-base station physical shared channel transmissions based on the first orthogonal cover code group may be dropped.

For example, all the device-to-base station physical shared channel transmissions based on the first orthogonal cover code group may be dropped based on a first time interval between a time point at which the overlap is detected and a first start time point of an earliest resource in the first orthogonal cover code group being smaller than a processing time.

For example, additionally, the first device may: search for a second orthogonal cover code group in which a second time interval between the time point at which the overlap is detected and a second start time point of an earliest resource is greater than the processing time, based on the first time interval being smaller than the processing time. For example, all the device-to-base station physical shared channel transmissions based on the first orthogonal cover code group may be dropped based on failure of the search for the second orthogonal cover code group.

For example, additionally, the first device may: determine occurrence of an error case based on the first orthogonal cover code group overlapping with two or more device-to-base station physical control channel resources including the first device-to-base station physical control channel resource; and select the first device-to-base station physical control channel resource from among the two or more device-to-base station physical control channel resources based on the determination of the occurrence of the error case.

For example, additionally, the first device may: transmit, to a base station, the device-to-base station control information through a device-to-base station physical control channel.

For example, a transmission of the device-to-base station physical control channel may be not repeated.

For example, the information related to the orthogonal cover code may be received from a base station.

For example, the information related to the orthogonal cover code may be information for a combination of orthogonal cover code-related parameters, and the information for the combination of orthogonal cover code-related parameters may be received through a state value of a time domain resource assignment field in base station-to-device control information.

For example, signals transmitted through the device-to-base station physical shared channel repetition may be the same.

For example, redundant versions of signals transmitted through the device-to-base station physical shared channel repetition may be the same.

For example, a repetition number of the device-to-base station physical shared channel repetition may be an integer multiple of a length of the orthogonal cover code.

For example, the device-to-base station control information may include channel state information, and all the device-to-base station physical shared channel transmissions based on the first orthogonal cover code group may be dropped based on the device-to-base station control information including the channel state information and the overlap.

The above-described embodiment may be applied to various devices described below. First, a processor 102 of a first device 100 may obtain information for a plurality of device-to-base station physical shared channel resources related to device-to-base station physical shared channel repetition. And, the processor 102 of the first device 100 may obtain information related to an orthogonal cover code. For example, the plurality of device-to-base station physical shared channel resources include at least one orthogonal cover code group to which the orthogonal cover code may be applied, and wherein, based on an overlap between a first device-to-base station physical shared channel resource in a first orthogonal cover code group among the at least one orthogonal cover code group and a first device-to-base station physical control channel resource on which device-to-base station control information is to be transmitted, all device-to-base station physical shared channel transmissions based on the first orthogonal cover code group may be dropped.

According to an embodiment of the present disclosure, a first device may be proposed. For example, the first device may comprise: at least one transceiver; at least one processor; and at least one memory connected to the at least one processor and storing instructions. For example, the instructions, based on being executed by the at least one processor, may cause the first device to: obtain information for a plurality of device-to-base station physical shared channel resources related to device-to-base station physical shared channel repetition; and obtain information related to an orthogonal cover code, wherein the plurality of device-to-base station physical shared channel resources may include at least one orthogonal cover code group to which the orthogonal cover code is applied, and wherein, based on an overlap between a first device-to-base station physical shared channel resource in a first orthogonal cover code group among the at least one orthogonal cover code group and a first device-to-base station physical control channel resource on which device-to-base station control information is to be transmitted, all device-to-base station physical shared channel transmissions based on the first orthogonal cover code group may be dropped.

For example, all the device-to-base station physical shared channel transmissions based on the first orthogonal cover code group may be dropped based on a first time interval between a time point at which the overlap is detected and a first start time point of an earliest resource in the first orthogonal cover code group being smaller than a processing time.

For example, additionally, the instructions may cause the first device to: search for a second orthogonal cover code group in which a second time interval between the time point at which the overlap is detected and a second start time point of an earliest resource is greater than the processing time, based on the first time interval being smaller than the processing time. For example, all the device-to-base station physical shared channel transmissions based on the first orthogonal cover code group may be dropped based on failure of the search for the second orthogonal cover code group.

For example, additionally, the instructions may cause the first device to: determine occurrence of an error case based on the first orthogonal cover code group overlapping with two or more device-to-base station physical control channel resources including the first device-to-base station physical control channel resource; and select the first device-to-base station physical control channel resource from among the two or more device-to-base station physical control channel resources based on the determination of the occurrence of the error case.

For example, additionally, the instructions may cause the first device to: transmit, to a base station, the device-to-base station control information through a device-to-base station physical control channel.

For example, a transmission of the device-to-base station physical control channel may be not repeated.

For example, the information related to the orthogonal cover code may be received from a base station.

For example, the information related to the orthogonal cover code may be information for a combination of orthogonal cover code-related parameters, and the information for the combination of orthogonal cover code-related parameters may be received through a state value of a time domain resource assignment field in base station-to-device control information.

For example, signals transmitted through the device-to-base station physical shared channel repetition may be the same.

For example, redundant versions of signals transmitted through the device-to-base station physical shared channel repetition may be the same.

For example, a repetition number of the device-to-base station physical shared channel repetition may be an integer multiple of a length of the orthogonal cover code.

For example, the device-to-base station control information may include channel state information, and all the device-to-base station physical shared channel transmissions based on the first orthogonal cover code group may be dropped based on the device-to-base station control information including the channel state information and the overlap.

According to an embodiment of the present disclosure, a processing device configured to control a first device may be proposed. For example, the processing device may comprise: at least one processor; and at least one memory connected to the at least one processor and storing instructions, wherein the instructions, based on being executed by the at least one processor, may cause the first device to: obtain information for a plurality of device-to-base station physical shared channel resources related to device-to-base station physical shared channel repetition; and obtain information related to an orthogonal cover code, wherein the plurality of device-to-base station physical shared channel resources may include at least one orthogonal cover code group to which the orthogonal cover code is applied, and wherein, based on an overlap between a first device-to-base station physical shared channel resource in a first orthogonal cover code group among the at least one orthogonal cover code group and a first device-to-base station physical control channel resource on which device-to-base station control information is to be transmitted, all device-to-base station physical shared channel transmissions based on the first orthogonal cover code group may be dropped.

According to an embodiment of the present disclosure, a non-transitory computer-readable storage medium storing instructions may be proposed. For example, the instructions, when executed, may cause a first device to: obtain information for a plurality of device-to-base station physical shared channel resources related to device-to-base station physical shared channel repetition; and obtain information related to an orthogonal cover code, wherein the plurality of device-to-base station physical shared channel resources may include at least one orthogonal cover code group to which the orthogonal cover code is applied, and wherein, based on an overlap between a first device-to-base station physical shared channel resource in a first orthogonal cover code group among the at least one orthogonal cover code group and a first device-to-base station physical control channel resource on which device-to-base station control information is to be transmitted, all device-to-base station physical shared channel transmissions based on the first orthogonal cover code group may be dropped.

FIG. 11 shows a procedure of a method that may be performed by a second device, according to an embodiment of the present disclosure. The embodiment of FIG. 11 may be combined with various embodiments of the present disclosure.

Referring to FIG. 11, in step S1110, a second device may transmit, to a first device, information for a plurality of device-to-base station physical shared channel resources related to device-to-base station physical shared channel repetition. For example, the plurality of device-to-base station physical shared channel resources may include at least one orthogonal cover code group to which an orthogonal cover code is applied. In step S1120, the second device may receive, from the first device, device-to-base station control information based on a first device-to-base station physical control channel resource. For example, based on an overlap between a first device-to-base station physical shared channel resource in a first orthogonal cover code group among the at least one orthogonal cover code group and the first device-to-base station physical control channel resource, all device-to-base station physical shared channel transmissions based on the first orthogonal cover code group may be dropped.

For example, additionally, the second device may transmit, to the first device, information related to the orthogonal cover code.

The above-described embodiment may be applied to various devices described below. First, a processor 202 of a second device 200 may control a transceiver 206 to transmit, to a first device 100, information for a plurality of device-to-base station physical shared channel resources related to device-to-base station physical shared channel repetition. For example, the plurality of device-to-base station physical shared channel resources may include at least one orthogonal cover code group to which an orthogonal cover code is applied. And, the processor 202 of the second device 200 may control the transceiver 206 to receive, from the first device 100, device-to-base station control information based on a first device-to-base station physical control channel resource. For example, based on an overlap between a first device-to-base station physical shared channel resource in a first orthogonal cover code group among the at least one orthogonal cover code group and the first device-to-base station physical control channel resource, all device-to-base station physical shared channel transmissions based on the first orthogonal cover code group may be dropped.

According to an embodiment of the present disclosure, a second device may be proposed. For example, the second device may comprise: at least one transceiver; at least one processor; and at least one memory connected to the at least one processor and storing instructions. For example, the instructions, based on being executed by the at least one processor, may cause the second device to: transmit, to a first device, information for a plurality of device-to-base station physical shared channel resources related to device-to-base station physical shared channel repetition, wherein the plurality of device-to-base station physical shared channel resources may include at least one orthogonal cover code group to which an orthogonal cover code is applied; and receive, from the first device, device-to-base station control information based on a first device-to-base station physical control channel resource, wherein, based on an overlap between a first device-to-base station physical shared channel resource in a first orthogonal cover code group among the at least one orthogonal cover code group and the first device-to-base station physical control channel resource, all device-to-base station physical shared channel transmissions based on the first orthogonal cover code group may be dropped.

For example, the instructions, based on being executed by the at least one processor, may cause the second device to: transmit, to the first device, the information related to the orthogonal cover code.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

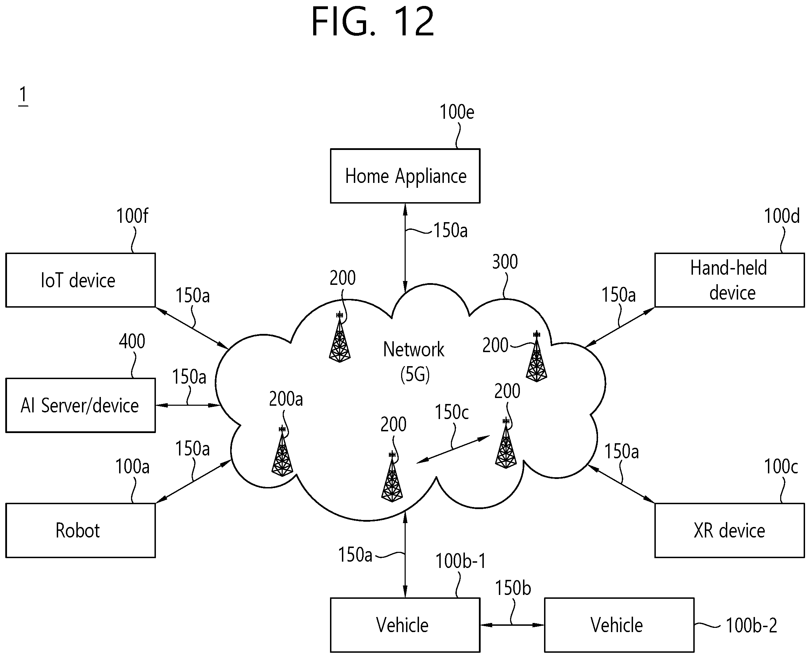

FIG. 12 shows a communication system 1, based on an embodiment of the present disclosure. The embodiment of FIG. 12 may be combined with various embodiments of the present disclosure.

Referring to FIG. 12, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

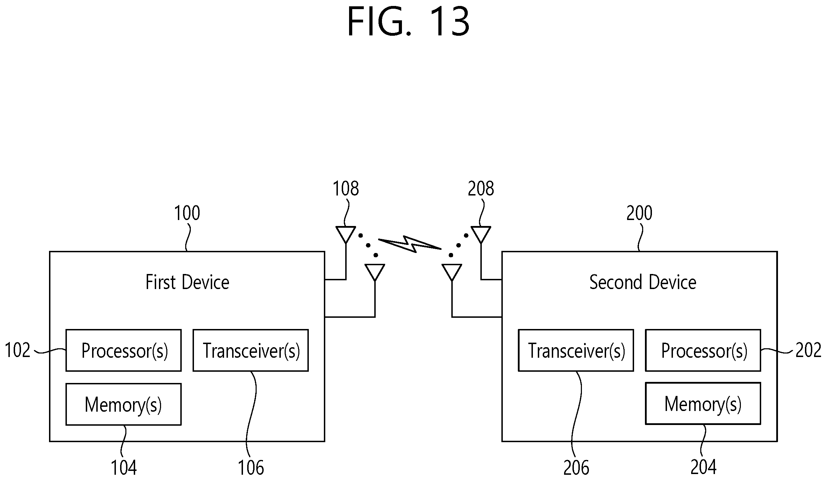

FIG. 13 shows wireless devices, based on an embodiment of the present disclosure. The embodiment of FIG. 13 may be combined with various embodiments of the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

For example, in the following, description for a first wireless device (or apparatus) and a second wireless device (or apparatus) may be extended to a wireless device (or apparatus) corresponding to a third wireless device 300 (or apparatus) or a subsequent reference number. For example, a reference number of a processor of the third wireless device 300 may be 302, and a reference number of a transceiver may be 306.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

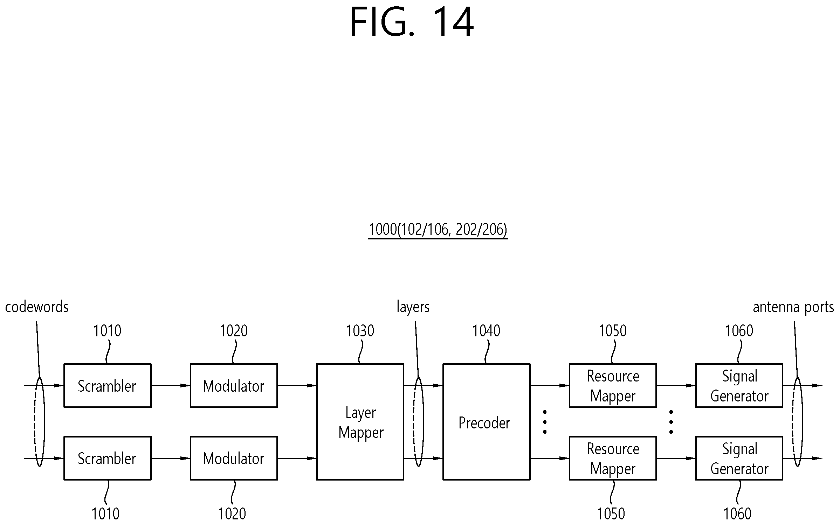

FIG. 14 shows a signal process circuit for a transmission signal, based on an embodiment of the present disclosure. The embodiment of FIG. 14 may be combined with various embodiments of the present disclosure.

Referring to FIG. 14, a signal processing circuit 1000 may include scramblers 1010, modulators 1020, a layer mapper 1030, a precoder 1040, resource mappers 1050, and signal generators 1060. An operation/function of FIG. 14 may be performed, without being limited to, the processors 102 and 202 and/or the transceivers 106 and 206 of FIG. 13. Hardware elements of FIG. 14 may be implemented by the processors 102 and 202 and/or the transceivers 106 and 206 of FIG. 13. For example, blocks 1010 to 1060 may be implemented by the processors 102 and 202 of FIG. 13. Alternatively, the blocks 1010 to 1050 may be implemented by the processors 102 and 202 of FIG. 13 and the block 1060 may be implemented by the transceivers 106 and 206 of FIG. 13.

Codewords may be converted into radio signals via the signal processing circuit 1000 of FIG. 14. Herein, the codewords are encoded bit sequences of information blocks. The information blocks may include transport blocks (e.g., a UL-SCH transport block, a DL-SCH transport block). The radio signals may be transmitted through various physical channels (e.g., a UE-to-base station physical shared channel (e.g., PUSCH) and a base station-to-UE physical shared channel (e.g., PDSCH)).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 14. For example, the wireless devices (e.g., 100 and 200 of FIG. 13) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

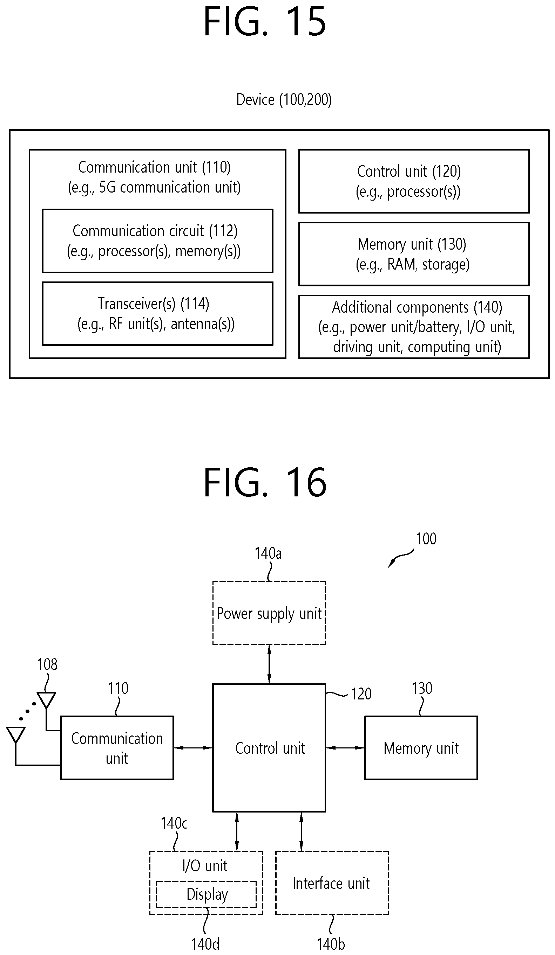

FIG. 15 shows another example of a wireless device, based on an embodiment of the present disclosure. The wireless device may be implemented in various forms according to a use-case/service (refer to FIG. 12). The embodiment of FIG. 15 may be combined with various embodiments of the present disclosure.

Referring to FIG. 15, wireless devices 100 and 200 may correspond to the wireless devices 100 and 200 of FIG. 13 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcast terminal, a hologram device, a public safety device, an MTC device, a medicine device, a fintech device (or a finance device), a security device, a climate/environment device, the AI server/device (400 of FIG. 12), the BSs (200 of FIG. 12), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 15 will be described in detail with reference to the drawings.

FIG. 16 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless terminal (WT). The embodiment of FIG. 16 may be combined with various embodiments of the present disclosure.

Referring to FIG. 16, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 15, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

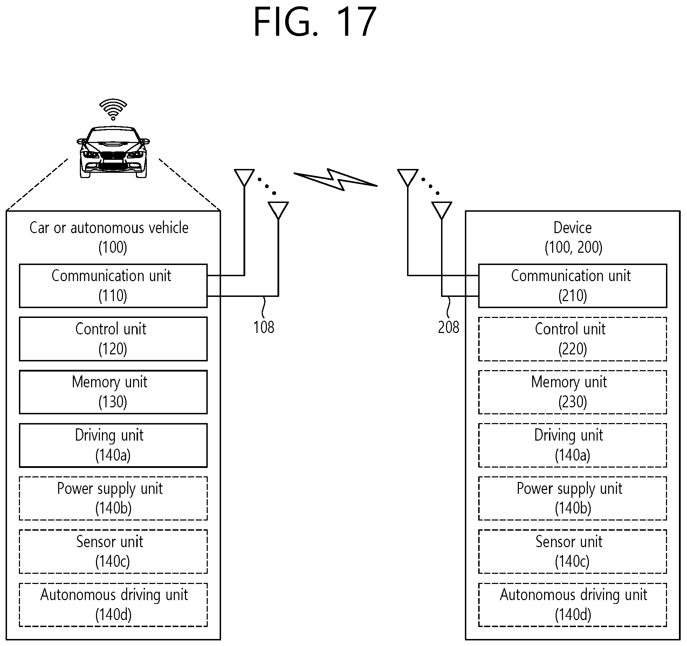

FIG. 17 shows a vehicle or an autonomous vehicle according to an embodiment of the present disclosure. The vehicle or the autonomous vehicle may be implemented as a mobile robot, a vehicle, a train, a manned or unmanned aerial vehicle (AV), a vessel, or the like. The embodiment of FIG. 17 may be combined with various embodiments of the present disclosure.

Referring to FIG. 17, a vehicle or an autonomous vehicle (100) may include an antenna unit (108), a communication unit (110), a control unit (120), a driving unit (140a), a power supply unit (140b), a sensor unit (140c), and an autonomous driving unit (140d). The antenna unit (108) may be configured as a part of the communication unit (110). Blocks 110/130/140a to 140d respectively correspond to blocks 110/130/140 of FIG. 15.

A communication unit (110) may transmit and receive signals (e.g., data, control signals, etc.) to and from external devices, such as another vehicle, a base station (e.g., a base station, a road side unit (RSU), etc.), and a server. A control unit (120) may control components of a vehicle or an autonomous vehicle (100) to perform various operations. The control unit (120) may include an electronic control unit (ECU). A driving unit (140a) may cause the vehicle or the autonomous vehicle (100) to travel on the ground. The driving unit (140a) may include an engine, a motor, a power train, wheels, brakes, a steering apparatus, and the like. A power supply unit (140b) may supply power to the vehicle or the autonomous vehicle (100), and may include a wired/wireless charging circuit, a battery, and the like. A sensor unit (140c) may obtain vehicle state information, surrounding environment information, user information, and the like. The sensor unit (140c) may include an inertial measurement unit (IMU) sensor, a collision sensor, a wheel sensor, a speed sensor, an inclination sensor, a weight detection sensor, a heading sensor, a position module, a vehicle forward/reverse sensor, a battery sensor, a fuel sensor, a tire sensor, a steering sensor, a temperature sensor, a humidity sensor, an ultrasonic sensor, an illuminance sensor, a pedal position sensor, and the like. An autonomous driving unit (140d) may implement a technology for maintaining a lane during driving, a technology for automatically controlling a speed such as adaptive cruise control, a technology for automatically driving along a predetermined route, a technology for automatically setting a route and driving when a destination is set, and the like.

As an example, a communication unit (110) may receive map data, traffic information data, and the like from an external server. An autonomous driving unit (140d) may generate an autonomous driving route and a driving plan based on the obtained data. A control unit (120) may control a driving unit (140a) such that a vehicle or an autonomous vehicle (100) moves along the autonomous driving route according to the driving plan (e.g., speed/direction adjustment). During autonomous driving, the communication unit (110) may obtain updated traffic information data from the external server periodically or aperiodically, and may obtain surrounding traffic information data from surrounding vehicles. In addition, during autonomous driving, a sensor unit (140c) may obtain vehicle state information and surrounding environment information. The autonomous driving unit (140d) may update the autonomous driving route and the driving plan based on newly obtained data/information. The communication unit (110) may deliver, to the external server, information related to a vehicle location, an autonomous driving route, a driving plan, and the like. Based on information collected from vehicles or autonomous vehicles, the external server may predict traffic information data in advance by using AI technology or the like, and may provide the predicted traffic information data to the vehicles or the autonomous vehicles.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method comprising:
obtaining information for a plurality of device-to-base station physical shared channel resources related to device-to-base station physical shared channel repetition; and
obtaining information related to an orthogonal cover code,
wherein the plurality of device-to-base station physical shared channel resources include at least one orthogonal cover code group to which the orthogonal cover code is applied, and
wherein, based on an overlap between a first device-to-base station physical shared channel resource in a first orthogonal cover code group among the at least one orthogonal cover code group and a first device-to-base station physical control channel resource on which device-to-base station control information is to be transmitted, all device-to-base station physical shared channel transmissions based on the first orthogonal cover code group are dropped.

2. The method of claim 1, wherein all the device-to-base station physical shared channel transmissions based on the first orthogonal cover code group are dropped based on a first time interval between a time point at which the overlap is detected and a first start time point of an earliest resource in the first orthogonal cover code group being smaller than a processing time.

3. The method of claim 2, further comprising:
searching for a second orthogonal cover code group in which a second time interval between the time point at which the overlap is detected and a second start time point of an earliest resource is greater than the processing time, based on the first time interval being smaller than the processing time,
wherein all the device-to-base station physical shared channel transmissions based on the first orthogonal cover code group are dropped based on failure of the search for the second orthogonal cover code group.

4. The method of claim 1, further comprising:
determining occurrence of an error case based on the first orthogonal cover code group overlapping with two or more device-to-base station physical control channel resources including the first device-to-base station physical control channel resource; and
selecting the first device-to-base station physical control channel resource from among the two or more device-to-base station physical control channel resources based on the determination of the occurrence of the error case.

5. The method of claim 1, further comprising:
Transmitting, to a base station, the device-to-base station control information through a device-to-base station physical control channel.

6. The method of claim 5, wherein a transmission of the device-to-base station physical control channel is not repeated.

7. The method of claim 1, wherein the information related to the orthogonal cover code is received from a base station.

8. The method of claim 7, wherein the information related to the orthogonal cover code is information for a combination of orthogonal cover code-related parameters, and
wherein the information for the combination of orthogonal cover code-related parameters is received through a state value of a time domain resource assignment field in base station-to-device control information.

9. The method of claim 1, wherein signals transmitted through the device-to-base station physical shared channel repetition are the same.

10. The method of claim 1, wherein redundant versions of signals transmitted through the device-to-base station physical shared channel repetition are the same.

11. The method of claim 1, wherein a repetition number of the device-to-base station physical shared channel repetition is an integer multiple of a length of the orthogonal cover code.

12. The method of claim 1, wherein the device-to-base station control information includes channel state information, and
wherein all the device-to-base station physical shared channel transmissions based on the first orthogonal cover code group are dropped based on the device-to-base station control information including the channel state information and the overlap.

13. The method of claim 1, wherein the method is performed by a first device.

14. A first device comprising:
at least one transceiver;
at least one processor; and
at least one memory connected to the at least one processor and storing instructions,
wherein the instructions, based on being executed by the at least one processor, cause the first device to:
obtain information for a plurality of device-to-base station physical shared channel resources related to device-to-base station physical shared channel repetition; and
obtain information related to an orthogonal cover code,
wherein the plurality of device-to-base station physical shared channel resources include at least one orthogonal cover code group to which the orthogonal cover code is applied, and
wherein, based on an overlap between a first device-to-base station physical shared channel resource in a first orthogonal cover code group among the at least one orthogonal cover code group and a first device-to-base station physical control channel resource on which device-to-base station control information is to be transmitted, all device-to-base station physical shared channel transmissions based on the first orthogonal cover code group are dropped.

15. A processing device configured to control a first device, the processing device comprising:
at least one processor; and
at least one memory connected to the at least one processor and storing instructions,
wherein the instructions, based on being executed by the at least one processor, cause the first device to:
obtain information for a plurality of device-to-base station physical shared channel resources related to device-to-base station physical shared channel repetition; and
obtain information related to an orthogonal cover code,
wherein the plurality of device-to-base station physical shared channel resources include at least one orthogonal cover code group to which the orthogonal cover code is applied, and
wherein, based on an overlap between a first device-to-base station physical shared channel resource in a first orthogonal cover code group among the at least one orthogonal cover code group and a first device-to-base station physical control channel resource on which device-to-base station control information is to be transmitted, all device-to-base station physical shared channel transmissions based on the first orthogonal cover code group are dropped.

16. A non-transitory computer-readable storage medium storing instructions that, when executed, cause a first device to:
obtain information for a plurality of device-to-base station physical shared channel resources related to device-to-base station physical shared channel repetition; and
obtain information related to an orthogonal cover code,
wherein the plurality of device-to-base station physical shared channel resources include at least one orthogonal cover code group to which the orthogonal cover code is applied, and
wherein, based on an overlap between a first device-to-base station physical shared channel resource in a first orthogonal cover code group among the at least one orthogonal cover code group and a first device-to-base station physical control channel resource on which device-to-base station control information is to be transmitted, all device-to-base station physical shared channel transmissions based on the first orthogonal cover code group are dropped.

17. A method comprising:
transmitting, to a first device, information for a plurality of device-to-base station physical shared channel resources related to device-to-base station physical shared channel repetition,
wherein the plurality of device-to-base station physical shared channel resources include at least one orthogonal cover code group to which an orthogonal cover code is applied; and
receiving, from the first device, device-to-base station control information based on a first device-to-base station physical control channel resource,
wherein, based on an overlap between a first device-to-base station physical shared channel resource in a first orthogonal cover code group among the at least one orthogonal cover code group and the first device-to-base station physical control channel resource, all device-to-base station physical shared channel transmissions based on the first orthogonal cover code group are dropped.

18. The method of claim 17, further comprising:
transmitting, to the first device, information related to the orthogonal cover code.

19. A second device comprising:
at least one transceiver;
at least one processor; and
at least one memory connected to the at least one processor and storing instructions,
wherein the instructions, based on being executed by the at least one processor, cause the second device to:
transmit, to a first device, information for a plurality of device-to-base station physical shared channel resources related to device-to-base station physical shared channel repetition,
wherein the plurality of device-to-base station physical shared channel resources include at least one orthogonal cover code group to which an orthogonal cover code is applied; and
receive, from the first device, device-to-base station control information based on a first device-to-base station physical control channel resource,
wherein, based on an overlap between a first device-to-base station physical shared channel resource in a first orthogonal cover code group among the at least one orthogonal cover code group and the first device-to-base station physical control channel resource, all device-to-base station physical shared channel transmissions based on the first orthogonal cover code group are dropped.

20. The second device of claim 19, wherein the instructions, based on being executed by the at least one processor, cause the second device to:
transmit, to the first device, the information related to the orthogonal cover code.
